(19) Europäisches Patentamt
European Patent Office
Office européen des brevets

(11) **EP 2 547 984 B1**

(12) **EUROPÄISCHE PATENTSCHRIFT**

(45) Veröffentlichungstag und Bekanntmachung des Hinweises auf die Patenterteilung:
**07.05.2014 Patentblatt 2014/19**

(51) Int Cl.:
***G01C 19/56*** *(2012.01)*

(21) Anmeldenummer: **11708502.7**

(22) Anmeldetag: **17.03.2011**

(86) Internationale Anmeldenummer:
**PCT/EP2011/054089**

(87) Internationale Veröffentlichungsnummer:
**WO 2011/113916 (22.09.2011 Gazette 2011/38)**

(54) **VERFAHREN ZUR ENTKOPPELTEN REGELUNG DER QUADRATUR UND DER RESONANZFREQUENZ EINES MIKROMECHANISCHEN GYROSKOPS**

METHOD FOR THE DECOUPLED CONTROL OF THE QUADRATURE AND THE RESONANCE FREQUENCY OF A MICRO-MECHANICAL GYROSCOPE

PROCÉDÉ DE RÉGULATION DÉCOUPLÉE DE LA QUADRATURE ET DE LA FRÉQUENCE DE RÉSONANCE D'UN GYROSCOPE MICROMÉCANIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.03.2010 DE 102010002973**

(43) Veröffentlichungstag der Anmeldung:
**23.01.2013 Patentblatt 2013/04**

(73) Patentinhaber: **Continental Teves AG & Co. oHG 60488 Frankfurt (DE)**

(72) Erfinder:
• **EGRETZBERGER, Markus**
**A-3452 Atzenbrugg (AT)**
• **KUGI, Andreas**
**A-1200 Wien (AT)**
• **MAIR, Florian**
**A-1040 Wien (AT)**

(56) Entgegenhaltungen:
**WO-A1-2004/038331    WO-A1-2005/066585
WO-A1-2008/031480**

**Beschreibung**

Die Erfindung betrifft ein Verfahren gemäß Oberbegriff von Anspruch 1 sowie einen mikromechanischen Drehratensensor mit vier Trimm-Elektrodenelementen, welche einer ersten seismischen Masse gemeinsam zugeordnet sind.

Es ist bekannt, dass mikromechanische Federn zur Aufhängung seismischer Massen in Drehratensensoren teilweise schon aufgrund relativ geringer Fertigungsungenauigkeiten, die insbesondere zu unerwünschten Flankenwinkeln der jeweiligen Strukturen führen, ohne Vorliegen einer Drehrate, in der Antriebsmode bzw. Primärmode Auslenkungen in Ausleserichtung verursachen. Hierdurch werden Störsignale erzeugt, welche unerwünschterweise als Drehratensignalanteile ausgewertet werden können und somit das Drehratensignal verfälschen bzw. einen Messfehler bezüglich des Drehratensignals verursachen.

Solche unerwünschten Flankenwinkel bzw. Verkippungen von Federn sind prozessbedingt und können nur eingeschränkt vermieden werden. Obig beschriebene Störsignale, welche nicht aufgrund einer erfassten Drehrate, sondern aufgrund von fehlerhaften Auslenkungen in Ausleserichtung in Abhängigkeit der Auslenkung der seismischen Masse sowie deren Federn in Antriebsrichtung entstehen, werden auch als Quadratur bzw. Quadratursignale bezeichnet.

Druckschrift WO 03/010492 A1 schlägt ein Verfahren zur Unterdrückung von Quadratursignalen in einem Drehratensensor vor, welcher zwei Trimmelektroden-Anordnungen umfasst, die einer seismischen Masse zugeordnet sind, bei dem mittels der an den Trimmelektroden angelegten Spannung die Quadratur des Drehratensensors unterdrückt wird. Allerdings kann durch diese Quadraturunterdrückung die Resonanzfrequenz der Auslesemode des Drehratensensors in unerwünschter Weise beeinflusst werden, wodurch auch die Differenzfrequenz zwischen den Resonanzfrequenzen hinsichtlich der Antriebsmode bzw. Primärmode und der Auslesemode bzw. Sekundärmode des Drehratensensors verändert wird. Dies ist umso nachteiliger, da die an den Trimmelektroden angelegte Spannung in die Verschiebung der Resonanzfrequenz der Auslesemode quadratisch eingeht.

Es ist üblich, dass die Ausprägung der Quadratur von Drehratensensoren eines Wafers, aufgrund von Prozessschwankungen relativ stark streut bzw. sich von Drehratensensor zu Drehratensensor eines Wafers relativ stark unterscheidet.

Außerdem ist es bekannt, die Auslenkung der seismischen Masse/n eines Drehratensensors bezüglich der Auslesemode bzw. Sekundärmode mittels wenigstens eines Trimm-Elektrodenelements bzw. einer Trimmelektrode zurückzustellen. Dies beeinflusst allerdings ebenfalls normalerweise die Resonanzfrequenz des Sekundäroszillators sowie eine mögliche Quadraturunterdrückung.

Die Druckschrift WO2005/066585 A1 offenbart ein Verfahren zur Quadraturbias-Kompensation in einem Corioliskreisel sowie einen dafür geeigneten Corioliskreisel mit einer seismischen Masse und vier Trimm-Elektrodenelementen, wobei zwischen der seismischen Masse und den Trimm-Elektrodenelementen jeweils eine Trimmspannung in Abhängigkeit einer Resonanzfrequenzstellgröße, einer Quadraturstellgröße und einer Rückstellgröße eingestellt wird.

Die Erfindung hat sich die Aufgabe gestellt, ein Verfahren zum Messbetrieb eines Drehratensensors sowie einen entsprechenden Drehratensensors vorzuschlagen, mit welchem eine Rückstellung der Auslenkung der Sekundärmode aufgrund einer erfassten Drehrate, eine Quadraturunterdrückung und eine Resonanzfrequenzeinstellung des Sekundäroszillators gemeinsam durchgeführt werden können, insbesondere so, dass diese drei Beeinflussungen zumindest teilweise unabhängig voneinander durchgeführt bzw. eingestellt werden können.

Diese Aufgabe wird erfindungsgemäß gelöst durch das Verfahren gemäß Anspruch 1 sowie den mikromechanischen Drehratensensor gemäß Anspruch 14.

Das Verfahren sowie der Drehratensensor sind vorzugsweise so ausgeprägt bzw. ausgebildet, dass zumindest die Einstellung der Resonanzfrequenz unabhängig von der Rückstellung der Auslenkung der seismischen Masse aufgrund einer erfassten Drehrate und der Quadraturunterdrückung durchgeführt werden kann, sowie dass insbesondere auch die Rückstellung der Auslenkung aufgrund einer erfassten Drehrate bzw. die gesamte Auslenkung der zumindest einen seismischen Masse im Rahmen der Sekundärmode sowie die Quadraturunterdrückung voneinander unabhängig eingestellt werden können. Die Quadraturstellgröße ist vorzugsweise als Stellgröße zur Unterdrückung der auf Quadratur beruhenden Auslenkung bzw. Schwingung der Sekundärmode definiert. Damit wird insbesondere ein unerwünschtes Quadratursignal bzw. ein Quadratursignalanteil des Ausgangssignals des Drehratensensors, welcher gegenüber dem die Drehrate abbildenden Anteil des Ausgangssignals des Drehratensensors im Wesentlichen um 90° bzw. 270° phasenverschoben ist, unterdrückt.

Die Rückstellgröße ist zweckmäßigerweise ein harmonisches Schwingungssignal, dessen Amplitude durch den Ausgang der ersten Reglereinheit bestimmt wird, wobei dieser Amplitudenwert mit einem harmonischen Schwingungssignal multipliziert wird, welches die gleich Frequenz aufweist, wie die Primär- bzw. Antriebsmode.

Die Resonanzfrequenzstellgröße ist bevorzugt als statische Größe definiert, mit welcher die Frequenzdifferenz aus der Resonanzfrequenz der Auslesemode und der Resonanzfrequenz der Antriebsmode im Wesentlichen einen definierten Wert aufweist bzw. auf einen definierten Wert eingeregelt wird oder alternativ vorzugsweise im Wesentlichen Null ist bzw. auf Null eingeregelt wird.

Unter einer Antriebsmode bzw. Primärmode wird bevorzugt eine Eigenmode eines Drehratensensors verstanden, bevorzugt die Eigenschwingung, besonders bevorzugt die Schwingung mit einer Resonanzfrequenz, der mindestens einen seismischen Masse, in welcher die seismische Masse des Drehratensensors insbesondere ständig schwingt. Ganz besonders bevorzugt weist der Drehratensensor wenigstens zwei mit einander gekoppelte seismische Massen auf, welche gegenphasig schwingen bzw. jeweils mit inverser Orientierung zueinander in gleicher Richtung im Zuge der Antriebsmode ausgelenkt werden.

Unter einer Auslesemode bzw. Sekundärmode wird vorzugsweise eine Eigenmode verstanden, welche sich vorzugsweise aufgrund einer Drehrate und der damit verbundenen Wirkung der Corioliskraft einstellt.

Erfindungsgemäß umfasst der Drehratensensor vier Trimm-Elektrodenelemente, welche der seismischen Masse direkt oder indirekt gemeinsam zugeordnet sind, wobei zwischen dem ersten Trimm-Elektrodenelement und der seismischen Masse eine erste elektrische Trimmspannung angelegt wird, zwischen dem zweiten Trimm-Elektrodenelement und der seismischen Masse eine zweite Trimmspannung, zwischen dem dritten Trimm-Elektrodenelement und der seismischen Masse eine dritte Trimmspannung und zwischen dem vierten Trimm-Elektrodenelement und der seismischen Masse eine vierte Trimmspannung angelegt wird, wobei die erste $u_1$, die zweite $u_2$, die dritte $u_3$ und die vierte Trimmspannung $u_4$ jeweils im Wesentlichen in folgender Abhängigkeit der Resonanzfrequenzstellgröße $\tilde{u}_T$, der Quadraturstellgröße $\tilde{u}_C$ und der Rückstellgröße $\tilde{u}_S$ eingestellt werden: $u_1 = \sqrt{\tilde{u}_T - \tilde{u}_C + \tilde{u}_S}$,

$$u_2 = \sqrt{\tilde{u}_T + \tilde{u}_C - \tilde{u}_S}, \quad u_3 = \sqrt{\tilde{u}_T + \tilde{u}_C + \tilde{u}_S}, \quad u_4 = \sqrt{\tilde{u}_T - \tilde{u}_C - \tilde{u}_S} \ .$$

Unter der Rückstellgröße wird alternativ vorzugsweise auch $\tilde{U}_{S,C}$ verstanden und/oder unter der Resonanzfrequenzstellgröße $\tilde{U}_{T,0}$ und/oder unter der Quadraturstellgröße $\tilde{U}_{C,0}$.

Vorzugsweise sind die Trimm-Elektrodenelemente jeweils so ausgebildet und angeordnet, dass sich zwischen dem ersten, zweiten, dritten und vierten Trimm-Elektrodenelement und einem jeweils zugeordneten Massen-Elektrodenelement der zugeordneten seismischen Masse, wobei zwischen Trimm-Elektrodenelement und Massen-Elektrodenelement die zugehörige Trimmspannung angelegt wird, eine Kapazität $C_1$, $C_2$, $C_3$ und $C_4$ wie folgt ausbildet

$$C_1 = \varepsilon_0 \frac{A_1 + r_1 t_1 q_1}{g_1 - s_1 q_2}, \quad C_2 = \varepsilon_0 \frac{A_2 + r_2 t_2 q_1}{g_2 + s_2 q_2}, \quad C_3 = \varepsilon_0 \frac{A_3 - r_3 t_3 q_1}{g_3 - s_3 q_2} \text{ und } C_4 = \varepsilon_0 \frac{A_4 - r_4 t_4 q_1}{g_4 + s_4 q_2},$$

wobei i jeweils ein Index bezüglich der Nummerierung der Elektrodenelemente ist, $g_i$ die Spaltentfernung zwischen Trimm-Elektrodenelement und zugeordnetem Massen-Elektrodenelement im unausgelenkten Zustand, $A_i$ die Überlappfläche zwischen Trimm-Elektrodenelement und zugeordnetem Massen-Elektrodenelement im unausgelenkten Zustand, das Produkt $\pm r_i$ mal $t_i$ mal $q_1$ die Änderung der Überlappfläche in Abhängigkeit der Auslenkung der Primärmode $q_1$ ist, wobei $t_i$ die Überlapptiefe zwischen Trimm-Elektrodenelement und zugeordnetem Massen-Elektrodenelement und $r_i$ eine erste positive geometrische Konstante bezüglich der Auslenkung der Primärmode $q_1$ ist, und das Produkt $\pm s_i$

mal $q_2$ die Änderung der Spaltentfernung zwischen Trimm-Elektrodenelement und Massen-Elektrodenelement in Abhängigkeit der Auslenkung der Sekundärmode $q_2$ ist, wobei $s_i$ eine zweite positive geometrische Konstante bezüglich der Auslenkung der Sekundärmode $q_2$ ist.

Die Trimm-Elektrodenelemente sind vorzugsweise als ebene Kondensatorplatten ausgebildet, welche im Wesentlichen parallel zur x-y-Ebene eines kartesischen Koordinatensystems angeordnet sind. Dabei erfolgt die Auslenkung, durch das Produkt $\pm r_i * q_1$ definiert, der Massen-Elektrodenelemente insbesondere in x-Richtung relativ zu den Trimm-Elektrodenelementen. Die Überlapptiefe $t_i$ der Trimm-Elektrodenelemente ist dabei in y-Richtung ausgerichtet. Die Auslenkung der Massen-Elektrodenelemente in z-Richtung relativ zu den Trimm-Elektrodenelementen ist besonders bevorzugt in z-Richtung ausgerichtet.

Vorzugsweise sind bei sämtlichen Trimm-Elektrodenelement-Massen-Elektrodenelementpaaren $A_i$, $r_i$, $t_i$, $g_i$ und $s_i$ im Wesentlichen gleich groß, also $A_1 = A_2 = A_3 = A_4$, und entsprechend jeweils gleiche Werte für i-ten Werte von $r_i$, $t_i$, $g_i$ und $s_i$.

Es ist bevorzugt, dass der Drehratensensor eine Regelungsanordnung umfasst, mit welcher die elektrischen Trimmspannungen eingeregelt werden, wobei einer ersten Reglereinheit die demodulierte Regelgröße Y zugeführt wird, welche insbesondere mittels einer Demodulation mit zwei zueinander um 90° phasenverschobenen harmonischen Signalen aus der ursprünglichen Regelgröße y gewonnen wird, wobei die ursprüngliche Regelgröße y die erfasste Auslenkung der seismischen Masse in Richtung ihrer Sekundärmode repräsentiert. Diese Demodulation erfolgt insbesondere mit zwei zueinander um 90° phasenverschobenen harmonischen Signalen mit jeweils der Frequenz entsprechend der Resonanzfrequenz der Primärmode.

Es ist zweckmäßig, dass die Regelungsanordnung eine Ausgangsgrößentransformationseinheit aufweist, in welcher die demodulierte Regelgröße Y dynamisch in Abhängigkeit der Frequenzdifferenz aus der Primärmodenfrequenz $\omega_1$ und der Sekundärmodenfrequenz $\omega_2$ und zumindest eines Dämpfungsparameters transformiert wird oder stationär in Abhängigkeit wenigstens einer Transformationskonstanten transformiert wird, in eine Drehratengröße und eine Quadraturgröße, wonach daraus eine Drehratenregelfehlergröße und eine Quadraturregelfehlergröße, jeweils unter Vorgabe einer Führungsgröße gebildet werden, und danach die Drehratenregelfehlergröße und die Quadraturregelfehlergröße als Eingangsgrößen der ersten Reglereinheit zugeführt werden, welche ausgangsseitig zumindest die Quadraturstellgröße $\tilde{u}_C$ und die Rückstellgröße $\tilde{u}_S$ zur zumindest teilweise entkoppelten Quadraturunterdrückung und Rückstellung der Auslenkung der seismischen Masse aufgrund einer erfassten Drehrate erzeugt.

Alternativ vorzugsweise wird aus der demodulierten Regelgröße Y unter Vorgabe einer Regelführungsgröße eine Regelfehlergröße gebildet, wonach die Regelungsanordnung in einer Ausgangsgrößentransformationseinheit die Regelfehlergröße dynamisch in Abhängigkeit der Frequenzdifferenz aus der Primärmodenfrequenz $\omega_1$ und der Sekundärmodenfrequenz $\omega_2$ und zumindest eines Dämpfungsparameters transformiert wird oder stationär in Abhängigkeit wenigstens einer Transformationskonstanten transformiert wird, in eine Drehratenregelfehlergröße und eine Quadraturregelfehlergröße, wonach die Drehratenregelfehlergröße und die Quadraturregelfehlergröße als Eingangsgrößen der ersten Reglereinheit zugeführt werden, welche ausgangsseitig zumindest die Quadraturstellgröße $\tilde{u}_C$ und die Rückstellgröße $\tilde{u}_S$ zur zumindest teilweise entkoppelten Quadraturunterdrückung und Rückstellung der Auslenkung der seismischen Masse aufgrund einer erfassten Drehrate erzeugt.

Bevorzugt weist der Drehratensensor, insbesondere dessen Regelungsanordnung, eine Stellgrößentransformationseinheit auf, durch welche in Abhängigkeit der Resonanzfrequenzstellgröße $\tilde{u}_T$, der Quadraturstellgröße $\tilde{u}_C$ und der Rückstellgröße $\tilde{u}_S$ nach Maßgabe der Gleichungen $u_1 = \sqrt{\tilde{u}_T - \tilde{u}_C + \tilde{u}_S}$, $u_2 = \sqrt{\tilde{u}_T + \tilde{u}_C - \tilde{u}_S}$, $u_3 = \sqrt{\tilde{u}_T + \tilde{u}_C + \tilde{u}_S}$, $u_4 = \sqrt{\tilde{u}_T - \tilde{u}_C - \tilde{u}_S}$ die Trimmspannungen $u_1$, $u_2$, $u_3$ und $u_4$ bereitgestellt werden.

Es ist bevorzugt, dass die Ausgangsgrößentransformationseinheit so ausgelegt ist, dass sie eine Multiplikation der demodulierten Regelgröße Y oder der davon abhängigen Regelfehlergröße mit folgender Übertragungsmatrix durch-führt $$\mathbf{T}(s) = \begin{bmatrix} -1 & \frac{\omega_1 - \omega_2}{s - \alpha_2} \\ \frac{\omega_1 - \omega_2}{s - \alpha_2} & 1 \end{bmatrix},$$ wobei $\alpha_2$ ein Dämpfungsparameter bezüglich der Sekundärmode ist und s die Laplacevariable.

Vorzugsweise weist die Regelungsanordnung eine Frequenzreglereinheit auf, welche in Abhängigkeit einer Frequenzinformation oder in Abhängigkeit einer davon abhängigen Frequenzregelfehlerinformation aus der demodulierten Regelgröße Y die Resonanzstellgröße $\tilde{u}_T$ bereitstellt.

Es ist bevorzugt, dass in der Regelungsanordnung ein harmonisches Frequenzidentifikationssignal generiert wird oder ihr zugeführt wird, welches eine Frequenz $\omega_s$ aufweist, die verschieden zur Primärmodenfrequenz $\omega_1$ ist, wobei die Quadraturstellgröße $\tilde{u}_C$ und/oder die Rückstellgröße $\tilde{u}_S$ mit dem Frequenzidentifikationssignal überlagert werden, insbesondere.nur die Rückstellgröße $\tilde{u}_S$, wonach aus der demodulierten Regelgröße Y nach einer zusätzlichen Demodulation mit der Frequenz $\omega_S$ die Frequenzinformation gewonnen wird, über die Frequenzdifferenz aus der Primärmodenfrequenz $\omega_1$ und der Sekundärmodenfrequenz $\omega_2$, wonach in Abhängigkeit dieser Information oder in Abhängigkeit einer davon abhängigen Frequenzregelfehlerinformation zumindest die Resonanzfrequenzstellgröße $\tilde{u}_T$ durch die Frequenzreglereinheit bereitgestellt wird.

Es ist zweckmäßig, dass nach der zusätzlichen Demodulation mit der Frequenz $\omega_s$, insbesondere mit einem harmonischen Signal mit der Frequenz $\omega_s$, die Frequenzinformation der Ausgangsgrößentransformationseinheit bereitgestellt wird und außerdem aus der Frequenzinformation eine Frequenzregelfehlerinformation mittels einer Frequenzinformationsführungsgröße, die insbesondere 0Hz ist, gewonnen wird, wonach diese Frequenzregelfehlerinformation der Frequenzreglereinheit zugeführt wird, welche daraus die Resonanzfrequenzstellgröße $\tilde{u}_T$ erzeugt.

Es ist bevorzugt, dass das harmonische Frequenzidentifikationssignal als Führungsgröße oder der Führungsgröße überlagert eingebracht wird entweder zur Erzeugung der Regelfehlergröße vor der Ausgangsgrößentransformationseinheit oder jeweils zur Erzeugung der Drehratenregelfehlergröße und der Quadraturregelfehlergröße nach der Ausgangsgrößentransformationseinheit, wonach die Drehratenregelfehlergröße und die Quadraturregelfehlergröße als Eingangsgrößen der ersten Reglereinheit zugeführt werden, welche ausgangsseitig zumindest die Quadraturstellgröße $\tilde{u}_C$ und die Rückstellgröße $\tilde{u}_S$ erzeugt.

Es ist zweckmäßig, dass die Rückstellgröße die mit einer Information des Frequenzidentifikationssignals behaftet ist, danach mit der Frequenz $\omega_s$ demoduliert wird, insbesondere mit einem harmonischen Signal mit der Frequenz $\omega_s$, wodurch die Frequenzinformation gewonnen wird, wonach diese Frequenzinformation der Ausgangsgrößentransformationseinheit bereitgestellt wird und außerdem aus der Frequenzinformation eine Frequenzregelfehlerinformation mittels einer Frequenzinformationsführungsgröße, die insbesondere 0Hz ist, gewonnen wird, wonach diese Frequenzregelfehlerinformation der Frequenzreglereinheit zugeführt wird, welche daraus die Resonanzfrequenzstellgröße $\tilde{u}_T$ erzeugt.

Vorzugsweise wird aus der Amplitude der Rückstellgröße, insbesondere durch Tiefpassfilterung, das Drehratensignal gewonnen, als Messsignal, welches im Wesentlichen proportional zur erfassten Drehrate ist.

Es ist bevorzugt, dass der Drehratensensor so ausgebildet ist, dass er Drehraten um zumindest zwei verschiedene Achsen erfassen kann, also der Drehratensensor "mehrachsig" ausgebildet ist.

Es ist bevorzugt, dass das erste und das zweite Trimm-Elektrodenelement, insbesondere hinsichtlich seiner jeweiligen Elektrodenfläche, im Wesentlichen unbeweglich ausgebildet und angeordnet sind und elektrisch isoliert und beabstandet gegenüber der seismischen Masse angeordnet sind.

Die Trimm-Elektrodenelemente sind zweckmäßigerweise voneinander isoliert und besonders bevorzugt jeweils identisch ausgebildet.

Der Drehratensensor weist zweckmäßigerweise zwei seismische Massen auf, welche miteinander gekoppelt sind.

Es ist zweckmäßig, dass das erste und das zweite Trimm-Elektrodenelement jeweils zumindest eine Elektrodenfläche aufweisen, welche einer Trimmfläche der seismischen Masse im Wesentlichen parallel gegenüberliegend angeordnet sind und wobei die Elektrodenflächen des ersten und zweiten Trimm-Elektrodenelements stets einem gegenüberliegenden Bereich der Trimmfläche zugeordnet sind und/oder diesen Bereich überlappen, insbesondere unabhängig vom Auslenkungszustand der seismischen Masse, zumindest bis zu einer definierten Amplitude/Auslenkung, besonders bevorzugt auch bei maximaler Auslenkung der seismischen Masse. Zweckmäßigerweise ragen die Elektrodenflächen dabei stets über den gegenüberliegenden Bereich der Trimmfläche hinaus. Die Elektrodenflächen und die Trimmfläche sind ganz besonders bevorzugt im Wesentlichen plan ausgebildet.

Unter einem mikromechanischen Drehratensensor wird bevorzugt ein mikromechanisches Gyroskop verstanden.

Die Erfindung betrifft auch die Verwendung des Drehratensensors in Kraftfahrzeugen, insbesondere in einem Kraftfahrzeugregelungssystem.

Das erfindungsgemäße Verfahren sowie der erfindungsgemäße Drehratensensor kann in unterschiedlichen Bereichen zum Erfassen einer oder mehrerer Drehraten und/oder mittels entsprechender Signalverarbeitung zur Erfassung einer oder mehrerer Drehbeschleunigungen verwendet werden. Dabei ist die Verwendung in Fahrzeugen, insbesondere in Kraftfahrzeugen und Luftfahrzeugen, in der Automatisierungstechnik, in Navigationssystemen, in Bildstabilisatoren von Kameras, in der Industrierobotik und in Spielekonsolen bevorzugt, dabei besonders bevorzugt in den jeweiligen entsprechenden Regelungssystemen. Ganz besonders bevorzugt ist die Verwendung des Verfahrens sowie des Drehratensensors bei/als Gierraten- und/oder Gierbeschleunigungssensor/en in einem Kraftfahrzeugregelungssystem, wie beispielsweise ESP.

Weitere bevorzugte Ausführungsformen ergeben sich aus den Unteransprüchen und den nachfolgenden Beschreibungen von Ausführungsbeispielen an Hand von Figuren.

Es zeigen in schematischer Darstellung

Fig. 1   ein Ausführungsbeispiel einer Kapazität gebildet aus einem ortsfesten bezüglich des Sensorgehäuses ausgebildeten Trimm-Elektrodenelement und einem mit der seismischen Masse verbundenen oder als Teil derselben ausgebildeten Massen-Elektrodenelement,

Fig. 2   eine beispielhafte Veranschaulichung zur Gewinnung der Frequenzinformation anhand der Verläufe der Fourier-Koeffizienten im eingeschwungenen Zustand,

Fig. 3   ein beispielhaftes Konzept A des Verfahrens und des Drehratensensors, bei welchem das harmonische Frequenzidentifikationssignal eingespeist wird, und

Fig. 4   ein beispielhaftes Konzept B des Verfahrens und des Drehratensensors, bei welchem das harmonische Frequenzidentifikationssignal als Führungsgröße vorgegeben wird.

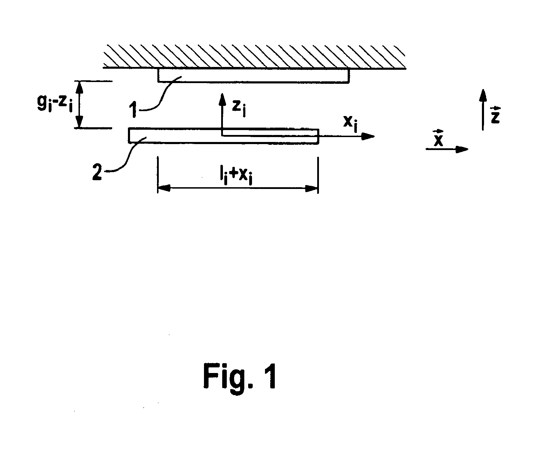

Die in Fig. 1 dargestellte beispielhafte Kapazität aus Trimm-Elektrodenelement 1 und Massen-Elektrodenelement 2 ist als Parallelplattenkondensator- wobei der Abstand bzw. die Spaltentfernung $g_i$ in z-Richtung zwischen den beiden Elektroden ausgebildet ist und die Auslenkung des Massen-Elektrodenelements in der Primärmode in x-Richtung erfolgt, wobei die Änderung der Überlappfläche in x-Richtung erfolgt, und die Auslenkung des Massen-Elektronenelements in der Sekundärmode in z-Richtung erfolgt.

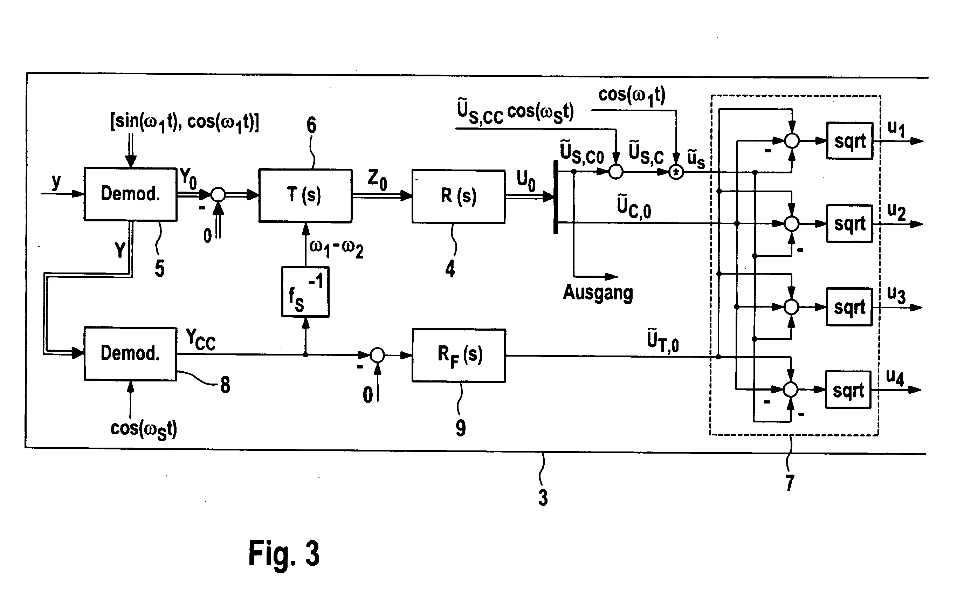

Fig. 3 veranschaulicht beispielhaft das Verfahren und den Drehratensensor nach Konzept A. Der Drehratensensor umfasst eine Regelungsanordnung 3, mit welcher die elektrischen Trimmspannungen $u_1$, $u_2$, $u_3$, $u_4$ eingeregelt werden, wobei einer ersten Reglereinheit 4 die demodulierte Regelgröße Y zugeführt wird, welche insbesondere mittels einer Demodulation 5 mit zwei zueinander um 90° phasenverschobenen harmonischen Signalen aus der ursprünglichen Regelgröße y gewonnen wird, wobei die ursprüngliche Regelgröße y die erfasste Auslenkung der seismischen Masse in Richtung ihrer Sekundärmode repräsentiert.

Dabei wird beispielhaft aus der demodulierten Regelgröße Y unter Vorgabe einer Regelführungsgröße 0 eine Regelfehlergröße gebildet, wonach die Regelungsanordnung 3 in einer Ausgangsgrößentransformationseinheit 6 die Regelfehlergröße dynamisch in Abhängigkeit der Frequenzdifferenz aus der Primärmodenfrequenz $\omega_1$ und der Sekundärmodenfrequenz $\omega_2$ und zumindest eines Dämpfungsparameters transformiert wird in eine Drehratenregelfehlergröße und eine Quadraturregelfehlergröße, als $Z_0$ symbolisiert, wonach die Drehratenregelfehlergröße und die Quadraturregelfehlergröße als Eingangsgrößen der ersten Reglereinheit 4 zugeführt werden, welche ausgangsseitig die Quadraturstellgröße $\tilde{u}_C$ und die Rückstellgröße $\tilde{u}_S$ zur zumindest teilweise entkoppelten Quadraturunterdrückung und Rückstellung der Auslenkung der seismischen Masse aufgrund einer erfassten Drehrate erzeugt. Hierbei stellt die erste Reglereinheit 4 die Amplitude $\tilde{U}_{S,C}$ bereit, welche mit einer harmonischen Schwingung $\cos(\omega_1 t)$, mit der gleichen Frequenz wie die Primärmode, multipliziert wird, wodurch die dynamische Rückstellgröße $\tilde{u}_S$ erzeugt wird.

Darüber hinaus weist die Regelungsanordnung 3, eine Stellgrößentransformationseinheit 7 auf, durch welche in Abhängigkeit der Resonanzfrequenzstellgröße $\tilde{u}_T$, hier $\tilde{U}_{T,0}$ genannt, der Quadraturstellgröße $\tilde{u}_C$, hier $\tilde{U}_{C,0}$ genannt, und der Rückstellgröße $\tilde{u}_S$ nach Maßgabe der Gleichungen $u_1 = \sqrt{\tilde{u}_T - \tilde{u}_C + \tilde{u}_S}$, $u_2 = \sqrt{\tilde{u}_T + \tilde{u}_C - \tilde{u}_S}$, $u_3 = \sqrt{\tilde{u}_T + \tilde{u}_C + \tilde{u}_S}$, $u_4 = \sqrt{\tilde{u}_T - \tilde{u}_C - \tilde{u}_S}$ die Trimmspannungen $u_1$, $u_2$, $u_3$ und $u_4$ bereitgestellt werden.

In der Regelungsanordnung 3 wird außerdem ein harmonisches Frequenzidentifikationssignal $\tilde{U}_{S,CC}\cos(\omega_s t)$ erzeugt, welches eine Frequenz $\omega_s$ aufweist, die verschieden zur Primärmodenfrequenz $\omega_1$ ist, wobei die Rückstellgröße $\tilde{U}_{S,CO}$, welche auch das Ausgangssignal des Drehratensensors, das proportional zur erfassten Drehrate ist, mit dem Frequenzidentifikationssignal überlagert wird, wonach aus der demodulierten Regelgröße $Y_0$ nach einer zusätzlichen Demodulation 8 mit der Frequenz $\omega_s$ die Frequenzinformation $Y_{CC}$ gewonnen wird, über die Frequenzdifferenz aus der Primärmodenfrequenz $\omega_1$ und der Sekundärmodenfrequenz $\omega_2$. Anschließend wird die Frequenzinformation $Y_{CC}$ der Ausgangsgrößentransformationseinheit 6 bereitgestellt und außerdem wird aus der Frequenzinformation eine Frequenzregelfehlerinformation mittels einer Frequenzinformationsführungsgröße 0 gewonnen, wonach diese Frequenzregelfehlerinformation der Frequenzreglereinheit 9 zugeführt wird, welche daraus die Resonanzfrequenzstellgröße $\tilde{u}_T$ bzw. hier $\tilde{U}_{T,0}$ genannt erzeugt.

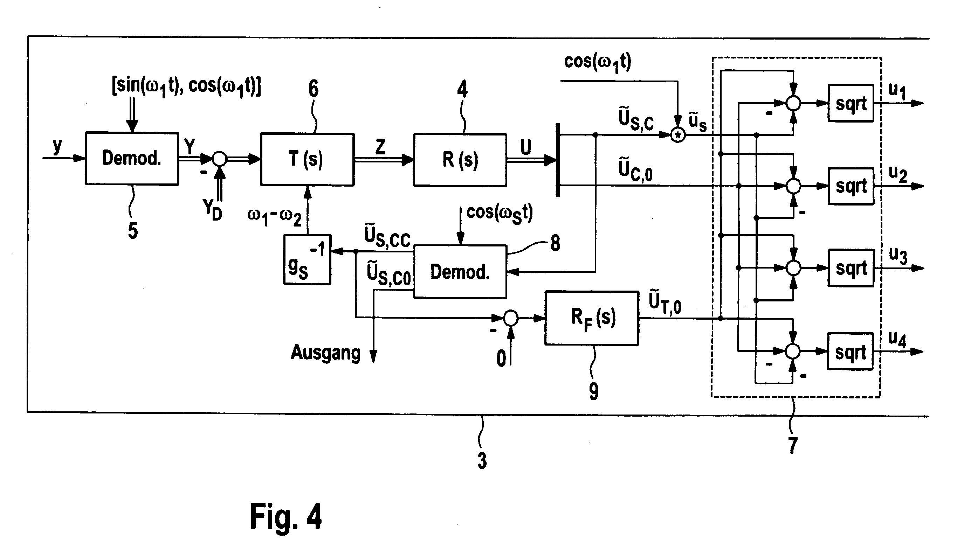

Ausgehend von dem in Fig. 3 gezeigten Konzept A, wird in Fig. 4 das beispielhafte Konzept B veranschaulicht. Dabei wird im Unterschied zu Konzept A das harmonische Frequenzidentifikationssignal, hier nun $Y_D$ genannt, als Führungsgröße zur Erzeugung der Regelfehlergröße vor der Ausgangsgrößentransformationseinheit 6 eingebracht wonach die Drehratenregelfehlergröße und die Quadraturregelfehlergröße Z als Eingangsgrößen der ersten Reglereinheit 4 zugeführt werden, welche ausgangsseitig zumindest die Quadraturstellgröße und die Rückstellgröße erzeugt, gemeinsam U, umfassend $\tilde{U}_{S,C}$ das zur Erzeugung der Rückstellgröße $\tilde{u}_S$ wieder mit der harmonischen Schwingung $\cos(\omega_1 t)$ multipliziert wird und der Quadraturstellgröße $\tilde{u}_C$, hier $\tilde{U}_{C,0}$ genannt. Die Rückstellgröße $\tilde{U}_{S,C}$, die mit einer Information des Frequenzidentifikationssignals behaftet ist, wird danach mit der Frequenz $\omega_s$ im zusätzlichen Demodulator 8 demoduliert, wodurch das die Frequenzinformation beinhaltende Signal $\tilde{U}_{S,CC}$ sowie das die erfasste Drehrate darstellende Signal $\tilde{U}_{S,C0}$ gewonnen werden. Das die Frequenzinformation beinhaltende Signal $\tilde{U}_{S,CC}$ wird anschließend der Ausgangsgrößentransformationseinheit 7 bereitgestellt und außerdem wird aus der Frequenzinformation eine Frequenzregelfehlerinformation mittels einer Frequenzinformationsführungsgröße 0 gewonnen, wonach diese Frequenzregelfehlerinformation der Frequenzreglereinheit 9 zugeführt wird, welche daraus die Resonanzfrequenzstellgröße $\tilde{u}_T$ hier $\tilde{U}_{T,0}$ genannt erzeugt.

Nachfolgend erfolgt beispielhaft eine Beschreibung und Analyse durch mathematische Darstellungen. Typischerweise besitzen mikroelektromechanische Drehratensensoren zumindest zwei schwach gedämpfte, zueinander orthogonale mechanische Vibrationsmoden, die sog. primäre und sekundäre Mode, welche bei Auftreten einer Drehrate über den Corioliseffekt gekoppelt sind. Durch herstellungsbedingte Ungenauigkeiten tritt im Allgemeinen eine weitere Kopplung zwischen Primär- und Sekundärmode in Form eines Unwuchteffekts auf, welcher als Quadratur bezeichnet wird. Im Ausgangssignal des Sensors weisen die Signalkomponenten zufolge des Coriolis- und des Unwuchteffektes allerdings einen Phasenunterschied von 90° auf. Durch eine entsprechende Demodulation kann das Ausgangssignal demnach in eine Drehraten- und eine Quadraturkomponente zerlegt werden. Das konventionelle Regelungskonzept von mikromechanischen Drehratensensoren umfasst daher typischerweise eine Quadraturregelung, welche die Signalkomponente zufolge des Unwuchteffektes mit Hilfe von zusätzlicher Aktorik kompensiert. Etwaige Offset-Driften der Drehratenkomponente im Ausgangssignal auf Grund von Demodulationsfehlern können dadurch vermieden werden. Um die Sensitivität zu erhöhen, werden in der Regel extrem schwach gedämpfte mechanische Strukturen eingesetzt. Das dadurch resultierende langsame dynamische Antwortverhalten des Sensors zufolge einer Drehrate kann verbessert werden, indem die Drehratenkomponente mit Hilfe weiterer geeigneter Aktoren in einer Rückstellregelung kompensiert wird. Die gewünschte Sensordynamik wird dann durch den geschlossenen Kreis der Rückstellregelung vorgegeben. Die maximale Sensitivität des Drehratensensors wird erreicht, wenn die Resonanzfrequenzen der primären und sekundären Mode identisch sind. Da in der Nähe dieses Arbeitspunktes die Sensitivitätsänderung bereits bei geringen Parameterabweichungen sehr groß wird, ist eine Regelung der Resonanzfrequenz notwendig. Die vorliegende Erfindung behandelt den Entwurf eines Gesamtregelungskonzeptes, welches die Quadratur-, Rückstell- und Frequenzregelung umfasst.

Bei dem dieser Erfindung zugrundeliegenden Sensortyp handelt es sich um einen kapazitiven Drehratensensor. Hierbei erfolgen die Anregung und das Auslesen der Primär- bzw. Sekundärschwingung mittels kapazitiver Aktoren und Sensoren. Für das Weitere sei angenommen, dass mit Hilfe geeigneter kapazitiver Aktoren bzw. zumindest einer Antriebseinrichtung der Drehratensensor in der Primärmode in eine harmonische Schwingung mit konstanter Amplitude versetzt wird. Die Frequenz der Schwingung entspricht dabei der Resonanzfrequenz der Primärmode. Nimmt man weiterhin an, dass die Amplitude und Frequenz der Primärschwingung ideal auf einen konstanten Sollwert geregelt werden, so lässt sich die Rückwirkung der Sekundär- auf die Primärschwingung vernachlässigen und die Bewegungsdifferentialgleichung der Sekundärmode in der Form

$$m_2 \ddot{q}_2 + d_2 \dot{q}_2 + k_2 q_2 = f_2(q_1, q_2, u_1, \ldots, u_m) + \Omega c_{21} \dot{q}_1 - k_{21} q_1 \qquad (1)$$

anschreiben. Dabei bezeichnen $q_1$ und $q_2$ die Primär- und Sekundärmode, $\Omega$ die Drehrate sowie $u_1,\ldots,u_m$ die Spannungen an den kapazitiven Aktoren, in Form von Kapazitäten, umfassend jeweils ein Trimm-Elektrodenelement und ein Massen-Elektrodenelement, zur Beeinflussung der Sekundärmode. Die positiven Konstanten $m_2$, $d_2$ und $k_2$ entsprechen dem Trägheits-, Dämpfungs- und Steifigkeitskoeffizienten, während die Konstanten $c_{21}$ und $k_{21}$, welche sowohl positive als auch negative Werte annehmen können, den Koppeltermen zufolge des Coriolis- und Unwuchteffektes entsprechen. Der nichtlineare Eingangsterm $f_2(q_1, q_2, u_1, \ldots, u_m)$ hängt von der Anordnung der kapazitiven Aktoren bzw. der Kapazitäten, umfassend jeweils ein Trimm-Elektrodenelement und ein Massen-Elektrodenelement, ab. Geht man von Parallelplattenkondensatoren aus, wie in Fig. 1 beispielhaft gezeigt, können diese derart konzipiert werden, dass sowohl eine harmonische Anregung der Sekundärmode als auch eine Kompensation des Koppelterms $k_{21}q_1$ durch Anlegen einer konstanten Spannungskomponente möglich ist. Durch den Gleichanteil erfolgt außerdem eine inhärente Beeinflussung der Resonanzfrequenz der Sekundärmode. Zunächst sei angenommen, dass nur Parallelplattenkondensatore n mit rechteckförmigen Elektroden betrachtet werden. Bei einer Anzahl von $m$ derartigen kapazitiven Aktoren zeigt Fig. 1 den $i$-ten Aktor, $i = 1,\ldots,m$, bestehend aus einer starr mit dem Gehäuse verbundenen Elektrode, als Trimm-Elektrodenelement 1 und einer beweglichen Elektrode, als Massen-Elektrodenelement 2. Die bewegliche Elektrode besitzt die translatorischen Freiheitsgrade $x_i$ und $z_i$, wobei $x_i$ und $z_i$ die Bewegung des Mittelpunktes der beweglichen Elektrode in Richtung der Primärmode bzw. der Sekundärmode beschreiben, d.h. wenn keine anderen Moden angeregt werden gilt $x_i = \pm r_i q_1$ und $z_i = \pm s_i q_2$ mit den positiven Konstanten $r_i$ und $s_i$. Die Kapazität $C_i$ und die gespeicherte Energie $W_{P,i}$ des $i$-ten Aktors ergibt sich nun zu

$$C_i = \varepsilon_0 \frac{A_i + x_i t_i}{g_i - z_i} = \varepsilon_0 \frac{A_i \pm r_i t_i q_1}{g_i \pm s_i q_2} \ , \qquad W_{P,i} = \frac{1}{2} C_i u_i^2 \qquad (2)$$

mit der elektrischen Spannung $u_i$, der Dielektrizitätskonstanten $\varepsilon_0$, dem Spalt $g_i$, der Überlapplänge $l_i$, der Tiefe $t_i$ und der Überlappfläche $A_i = l_i t_i$ im unverformten bzw. unausgelenkten Zustand. Die gesamte eingeprägte Kraft der kapazitiven Aktoren, $f_2$ in (1), berechnet sich in der Form

$$f_{2,i} = \frac{\partial W_{P,i}}{\partial q_2} = \mp \frac{1}{2} \frac{\varepsilon_0 s_i (A_i \pm r_i t_i q_1)}{(g_i \pm s_i q_2)^2} u_i^2 \, , \qquad f_2(q_1, q_2, u_1, \dots, u_m)$$

$$= \sum_{i=1}^{m} f_{2,i} \, . \qquad\qquad (3)$$

Aus (2) und (3) erkennt man, dass je nach geometrischer Anordnung des kapazitiven Aktors bzw. der Trimm-Elektrodenelemente und Massen-Elektrodenelemente eine Kraftwirkung auf die Sekundärmode ausgeübt werden kann, welche vier unterschiedliche Vorzeichen-Permutationen aufweist, nämlich für $x_i = \pm r_i q_1$ und $z_i = \pm s_i q_2$.

Nimmt man zunächst an, dass genau vier kapazitive Aktoren, also vier Trimm-Elektrodenelemente mit zugeordneten Massen-Elektrodenelementen existieren, welche unterschiedliche Vorzeichen-Permutationen besitzen, dann gilt für die Kraft auf die Sekundärmode

$$f_2 = \frac{\varepsilon_0}{2} \left( \frac{s_1(A_1 + r_1 t_1 q_1)}{(g_1 - s_1 q_2)^2} u_1^2 - \frac{s_2(A_2 + r_2 t_2 q_1)}{(g_2 + s_2 q_2)^2} u_2^2 + \frac{s_3(A_3 - r_3 t_3 q_1)}{(g_3 - s_3 q_2)^2} u_3^2 \right.$$
$$\left. - \frac{s_4(A_4 - r_4 t_4 q_1)}{(g_4 + s_4 q_2)^2} u_4^2 \right) . \qquad\qquad (4)$$

Das Regelungskonzept umfasst davon ausgehend die Eingangsgrößentransformation mit den vier Trimmspannungen $u_1$ bis $u_4$ in Abhängigkeit der Resonanzfrequenzstellgröße $\tilde{u}_T$, der Quadraturstellgröße $\tilde{u}_C$ und der Rückstellgröße $\tilde{u}_S$ nach folgenden Gleichungen:

$$u_1 = \sqrt{\tilde{u}_T - \tilde{u}_C + \tilde{u}_S} \, , \qquad u_2 = \sqrt{\tilde{u}_T + \tilde{u}_C - \tilde{u}_S} \, ,$$
$$u_3 = \sqrt{\tilde{u}_T + \tilde{u}_C + \tilde{u}_S} \, , \qquad u_4 = \sqrt{\tilde{u}_T - \tilde{u}_C - \tilde{u}_S} \qquad\qquad (5)$$

Setzt man die Transformation (5) in (4) ein und linearisiert den Ausdruck $f_2$ nach $q_1$ und $q_2$ um den Arbeitspunkt $q_1 = 0$ und $q_2 = 0$, so erhält man eine näherungsweise Beziehung gültig für kleine Auslenkungen. Unter der Annahme, dass der Spalt für alle Parallelplattenkondensatoren gleich groß ist, d.h. $g = g_j$, sowie folgende geometrische Beziehungen erfüllt sind $sA = s_j A_j$, $rst = r_j s_j t_j$ und $s^2 A = s_j^2 A_j$ für $j = 1,\dots,m$, welche als Symmetriebedingungen für die gewichteten Überlappflächen und -längen interpretiert werden können, ergibt sich die lineare Approximation in der Form

$$f_2 \cong \underbrace{\frac{2\varepsilon_0 s_j A_j}{g^2}}_{b_2} \tilde{u}_S - \underbrace{\frac{2\varepsilon_0 r_j s_j t_j}{g^2}}_{k_{21,C}} q_1 \tilde{u}_C + \underbrace{\frac{4\varepsilon_0 s_j^2 A_j}{g^3}}_{k_{2,T}} q_2 \tilde{u}_T \, . \qquad\qquad (6)$$

Aus (6) erkennt man, dass die transformierten Eingangsgrößen Resonanzfrequenzstellgröße $\tilde{u}_T$, Quadraturstellgröße $\tilde{u}_C$ und Rückstellgröße $\tilde{u}_S$ nun voneinander entkoppelt sind. Gleichung (1) kann nun in der Form

$$m_2\ddot{q}_2 + d_2\dot{q}_2 + \left(k_2 - k_{2,T}\tilde{u}_T\right)q_2 = b_2\tilde{u}_S + \Omega c_{21}\dot{q}_1 - \left(k_{21}+k_{21,c}\tilde{u}_C\right)q_1 \qquad (7)$$

aufgestellt werden. Es zeigt sich unmittelbar in (7), dass der Eingang $\tilde{u}_S$ zur harmonischen Anregung bzw. Rückstellung der Sekundärmode, der Eingang $\tilde{u}_C$ zur Kompensation der Unwucht und der Eingang $\tilde{u}_T$ zum Trimmen der Resonanzfrequenz der Sekundärmode herangezogen werden kann.

Im bisher Hergeleiteten wurde die einschränkende Annahme getroffen, dass alle kapazitiven Aktoren rechteckförmige Elektroden und keine rotatorischen Freiheitsgrade besitzen. Nun lässt sich das obige Konzept sehr einfach auf beliebig geformte Elektroden erweitern, die sich aus einer finiten Anzahl hinreichend kleiner rechteckförmiger Elemente darstellen lassen. Unter der Annahme einer Unterteilung in hinreichend kleine Elemente lässt sich somit auch die Kraftwirkung von beliebig geformten rotierenden Elektroden in der obigen Form approximieren. Weiterhin wird angenommen, dass die finiten Aktorelemente zu vier Gruppen $k = 1,...,4$ mit der Anzahl $m_k$ an Elementen mit gemeinsamer Vorzeichen-Permutation zusammengefasst und mit der Spannung $u_k$ bzw. den entsprechenden Trimmspannungen versorgt werden. Erfüllen die verteilten Aktoren die geometrischen Beziehungen

$$sA = \sum_{j=1}^{m_1} s_{1,j}A_{1,j} = \sum_{j=1}^{m_2} s_{2,j}A_{2,j} = \sum_{j=1}^{m_3} s_{3,j}A_{3,j} = \sum_{j=1}^{m_4} s_{4,j}A_{4,j} \, ,$$

$$rst = \sum_{j=1}^{m_1} r_{1,j}s_{1,j}t_{1,j} = \sum_{j=1}^{m_2} r_{2,j}s_{2,j}t_{2,j} = \sum_{j=1}^{m_3} r_{3,j}s_{3,j}t_{3,j} = \sum_{j=1}^{m_4} r_{4,j}s_{4,j}t_{4,j} \, ,$$

$$s^2A = \sum_{j=1}^{m_1} s_{1,j}^2 A_{1,j} = \sum_{j=1}^{m_2} s_{2,j}^2 A_{2,j} = \sum_{j=1}^{m_3} s_{3,j}^2 A_{3,j} = \sum_{j=1}^{m_4} s_{4,j}^2 A_{4,j} \, ,$$

so lässt sich die gesamte Kraft auf die Sekundärmode mit

$$b_2 = 2\frac{\varepsilon_0}{g^2}sA \, , \qquad k_{21,c} = 2\frac{\varepsilon_0}{g^2}rst \, , \qquad k_{2,T} = 4\frac{\varepsilon_0}{g^3}s^2A$$

wiederum in der Form (6) approximieren.

Für den eigentlichen Reglerentwurf bedient man sich bevorzugt eines sogenannten Hüllkurvenmodells, welches die Dynamik der Fourier-Koeffizienten der Systemgrößen beschreibt. Dazu nimmt man zunächst an, dass die Primärmode eine harmonische Schwingung in der Form $q_1 = Q_{1,S}\sin(\omega_1 t)$ mit der konstanten Amplitude $Q_{1,S}$ und der Frequenz $\omega_1$, welche der Eigenfrequenz der Primärmode entspricht, vollführt. Weiterhin nimmt man an, dass die Sekundärmode sich als eine harmonische Schwingung der Form $q_2 = Q_{2,S}\sin(\omega_1 t) + Q_{2,C}\cos(\omega_1 t)$ darstellen lässt. Bei einer harmonischen Anregung mit dem Eingang $\tilde{u}_S = \tilde{U}_{S,C}\cos(\omega_1 t)$ sowie den konstanten Eingängen $\tilde{u}_T = \tilde{U}_{T,0}$ und $\tilde{u}_C = \tilde{U}_{C,0}$ lässt sich die Dynamik der Fourier-Koeffizienten $Q_{2,S}$ und $Q_{2,C}$ mit Hilfe des Differenzialgleichungssystems

$$\frac{d}{dt}\begin{bmatrix} Q_{2,S} \\ Q_{2,C} \end{bmatrix} = \begin{bmatrix} \alpha_2 & \omega_1 - \omega_2 \\ -\omega_1 + \omega_2 & \alpha_2 \end{bmatrix}\begin{bmatrix} Q_{2,S} \\ Q_{2,C} \end{bmatrix} - \begin{bmatrix} \beta_{21}\Omega - \beta_2\tilde{U}_{S,C} \\ \beta_{21}\left(\Gamma_M + \Gamma_C\tilde{U}_{C,0}\right) \end{bmatrix} \qquad (8)$$

mit dem Dämpfungsparameter und der Eigenfrequenz der Sekundärmode

$$\alpha_2 = -\frac{1}{2}\frac{d_2}{m_2}\ , \qquad \omega_2 = \sqrt{\frac{k_2 + k_{2,T}\tilde{U}_{T,0}}{m_2} - \alpha_2^2} \tag{9}$$

sowie den Eingangs- und Unwuchtparametern

$$\beta_2 = \frac{1}{2}\frac{b_2}{m_2\omega_2}\ , \qquad \beta_{21} = \frac{1}{2}\frac{\omega_1}{\omega_2}\frac{c_{21}}{m_2}Q_{1,S}\ , \qquad \Gamma_{\mathrm{M}} = \frac{k_{21}}{\omega_1 c_{21}}\ ,$$
$$\Gamma_{\mathrm{C}} = \frac{k_{21,C}}{\omega_1 c_{21}} \tag{10}$$

und den Eingängen $\tilde{U}_{T,0}$, $\tilde{U}_{C,0}$ und $\tilde{U}_{S,C}$ beschreiben. Im Folgenden werden die harmonisch oszillierenden Systemgrößen ($q_2$, $\tilde{u}_S$, ...) als "schnelle" Signale und die zugehörigen Fourier-Koeffizienten ($Q_{2,S}$, $Q_{2,C}$, $\tilde{U}_{S,C}$, ...) als "langsame" Signale bezeichnet.

Durch eine Demodulation des Ausgangssignals $y = c_2 q_2$ können nun die Fourier-Koeffizienten $Y_S = c_2 Q_{2,S}$ und $Y_C = c_2 Q_{2,C}$ bestimmt werden. In konventionellen Regelungskonzepten wird eine Phasenkorrektur des Ausgangssignals in Form einer Transformation

$$\begin{bmatrix} Z_R \\ Z_Q \end{bmatrix} = \begin{bmatrix} \sin(\phi) & \cos(\phi) \\ \cos(\phi) & -\sin(\phi) \end{bmatrix} \begin{bmatrix} Y_S \\ Y_C \end{bmatrix}\ , \qquad \phi = \arctan\left(\frac{\alpha_2}{\omega_1 - \omega_2}\right) \tag{11}$$

durchgeführt, sodass die Kopplung der beiden Differenzialgleichungen in (8), welche durch den Dämpfungsparameter $\alpha_2$ und die Differenz der Eigenfrequenzen von Primär- und Sekundärmode $\omega_1 - \omega_2$ gegeben ist, stationär aufgehoben wird. Im eingeschwungenen Zustand ergibt sich dann ein Drehraten- bzw. Quadratursignal von

$$Z_R = S\left(-\Omega + \frac{\beta_2}{\beta_{21}}\tilde{U}_{S,C}\right)\ , \qquad Z_Q = S\left(\Gamma_{\mathrm{M}} + \Gamma_{\mathrm{C}}\tilde{U}_{C,0}\right) \tag{12}$$

mit der Sensitivität

$$S = \frac{c_2\beta_{21}}{\sqrt{\alpha_2^2 + (\omega_1 - \omega_2)^2}}\ . \tag{13}$$

Mit dem Stelleingang $\tilde{U}_{C,0}$ kann das Quadratursignal $Z_Q$ auf Null geregelt werden. Da jedoch die Entkopplung nur im stationären Fall exakt ist, beeinflusst jede Änderung der Stellgröße $\tilde{U}_{C,0}$ auch das Drehratensignal. Um dieses Problem zu umgehen, wird nun folgende Vorgehensweise vorgeschlagen.

Im Folgenden wird beispielhaft das Verfahren bzw. der Drehratensensor nach Konzept A, veranschaulicht anhand Fig. 3 erläutert:

Die Übertragungsmatrix des Systems (8)-(10) für konstantes $\tilde{U}_{T,0}$ vom Eingang $\mathbf{U} = [\tilde{U}_{S,C}\ \tilde{U}_{C,0}]^T$ auf den Ausgang $\mathbf{Y} = [Y_S\ Y_C]^T$ ergibt sich zu

$$\mathbf{G}(s) = \frac{c_2}{(s - \alpha_2)^2 + (\omega_1 - \omega_2)^2} \begin{bmatrix} -(s - \alpha_2)\beta_2 & (\omega_1 - \omega_2)\beta_{21}\Gamma_C \\ (\omega_1 - \omega_2)\beta_2 & (s - \alpha_2)\beta_{21}\Gamma_C \end{bmatrix}. \qquad (14)$$

Wählt man eine Ausgangstransformation mit der Übertragungsmatrix

$$\mathbf{T}(s) = \begin{bmatrix} -1 & \dfrac{\omega_1 - \omega_2}{s - \alpha_2} \\ \dfrac{\omega_1 - \omega_2}{s - \alpha_2} & 1 \end{bmatrix}, \qquad (15)$$

so erhält man eine entkoppelte Strecke der Form $\tilde{\mathbf{G}}(s) = \mathbf{T}(s)\mathbf{G}(s) = \mathrm{diag}(\tilde{G}_{11}, \tilde{G}_{22})$ mit den Übertragungsfunktionen

$$\tilde{G}_{11} = \frac{\beta_2 c_2}{s - \alpha_2}, \qquad \tilde{G}_{22} = \frac{\beta_{21} c_2 \Gamma_C}{s - \alpha_2}. \qquad (16)$$

Die Komponenten $Z_R$ und $Z_Q$ des transformierten Ausgangs $\mathbf{Z}(s) = \mathbf{T}(s)\mathbf{Y}(s)$ mit $\mathbf{Z} = [Z_R\ Z_Q]^T$ werden wieder als Drehraten- und Quadratursignal bezeichnet. Für die beiden Teilsysteme, gegeben durch die Übertragungsfunktionen (16), kann nun ein entkoppelter Regler $\mathbf{R}(s) = \mathrm{diag}(R_{11}(s), R_{22}(s))$, bestehend aus dem Rückstellregler $R_{11}$ und dem Quadraturregler $R_{22}$, entworfen werden, welcher die beiden Komponenten $Z_R$ und $Z_Q$ auf Null regelt. Die Stellgröße der Rückstellregelung $\tilde{U}_{S,C}$ ist dann im eingeschwungenen Zustand (siehe (12) für $Z_R = 0$) proportional zur Drehrate und dient daher als Ausgang des Drehratensensors. Für eine ideale Entkopplung durch die Übertragungsmatrix (15) müssen allerdings vorzugsweise der Dämpfungsparameter $\alpha_2$ und die Frequenzdifferenz $\omega_1 - \omega_2$ exakt bekannt sein.

Man unterscheidet nun zwischen dem sog. "Split-Mode" und dem "Matched-Mode" Betrieb. Im Split-Mode Betrieb ist der Eingang $\tilde{U}_{T,0}$ konstant und der Betrag der Frequenzdifferenz nimmt einen konstanten Wert $|\omega_1 - \omega_2| \gg 1$ an. Da für eine hinreichend große Frequenzdifferenz die Änderung der Sensitivität (13) zufolge von unterschiedlichen Dämpfungsparametern $d_2$ und damit $\alpha_2$ keine wesentliche Rolle spielt, ist eine Regelung der sekundären Eigenfrequenz nicht notwendig und eine offline-Identifikation der Parameter $\alpha_2$ und $\omega_1 - \omega_2$ ausreichend. Im Matched-Mode Betrieb hingegen wird ein möglichst kleiner Frequenzabstand $\omega_1 - \omega_2 \to 0$ angestrebt. Die Sensitivitätsänderung besitzt ihr Maximum in der Nähe des Punktes $\omega_1 = \omega_2$, weshalb eine Frequenzregelung und eine online-Identifikation des Frequenzabstandes $\omega_1 - \omega_2$ unumgänglich ist.

Für den folgenden Entwurf der Frequenzregelung sei angenommen, dass der Parameter $\alpha_2$ aus einer offline-Identifikation hinreichend genau bekannt ist und die Frequenzregelung im Vergleich zur Quadratur- und Rückstellregelung mit einer um eine Größenordnung langsameren Dynamik betrieben wird. Somit kann $\alpha_2$ als Konstante und $\Delta\omega = \omega_1 - \omega_2$ als langsam veränderlicher Parameter angenommen werden, welcher durch eine geeignete online-Identifikation $\Delta\hat{\omega}$ zur Verfügung gestellt wird. Der oben entworfene Quadratur- und Rückstellregler kann also mit der Transformationsmatrix $\mathbf{T}(s)|_{\Delta\omega = \Delta\hat{\omega}}$ in der gleichen Form verwendet werden.

Da das Drehratensignal (über die Rückstellregelung) zur Messung der unbekannten Drehrate und das Quadratursignal zur Kompensation der unbekannten Unwucht verwendet wird, kann aus dem Ausgangssignal keine weitere Information, z.B. über die Frequenzdifferenz, gewonnen werden. Dazu ist eine zusätzliche Anregung der Sekundärmode notwendig, welche Frequenzanteile im Spektrum enthält, die unterschiedlich von der Eigenfrequenz $\omega_1$ sind. Eine einfach realisierbare Möglichkeit ist eine harmonische Anregung mit der Frequenz $\omega_S = \omega_1/l$ und $l \gg 1$. Nimmt man also Eingangsgrößen des Hüllkurvenmodells (8) der Form $\tilde{U}_{S,C} = \tilde{U}_{S,C0} + \tilde{U}_{S,CS}\sin(\omega_S t) + \tilde{U}_{S,CC}\cos(\omega_S t)$ und $\tilde{U}_{C,0} = \tilde{U}_{C,00} + \tilde{U}_{C,0S}\sin(\omega_S t) + \tilde{U}_{C,0C}\cos(\omega_S t)$ und entsprechende Zustandsgrößen $Q_{2,S} = Q_{2,S0} + Q_{2,SS}\sin(\omega_S t) + Q_{2,SC}\cos(\omega_S t)$ und $Q_{2,C} = Q_{2,C0} + Q_{2,CS}\sin(\omega_S t) + Q_{2,CC}\cos(\omega_S t)$ an, so lässt sich unter Vernachlässigung der Koppelterme zur Primärmode die Dynamik der neuen Fourier-Koeffizienten $Q_{2,SS}, Q_{2,SC}, Q_{2,CS}$ und $Q_{2,CC}$ (SC-Subsystem) durch ein Hüllkurvenmodell der Form

$$\frac{\mathrm{d}}{\mathrm{d}t}\begin{bmatrix} Q_{2,SS} \\ Q_{2,SC} \\ Q_{2,CS} \\ Q_{2,CC} \end{bmatrix}$$

$$= \begin{bmatrix} \alpha_2 & \omega_S & \omega_1 - \omega_2 & 0 \\ -\omega_S & \alpha_2 & 0 & \omega_1 - \omega_2 \\ -\omega_1 + \omega_2 & 0 & \alpha_2 & \omega_S \\ 0 & -\omega_1 + \omega_2 & -\omega_S & \alpha_2 \end{bmatrix}\begin{bmatrix} Q_{2,SS} \\ Q_{2,SC} \\ Q_{2,CS} \\ Q_{2,CC} \end{bmatrix} \tag{17}$$

$$+ \begin{bmatrix} 0 & 0 & -\beta_2 & 0 \\ 0 & 0 & 0 & -\beta_2 \\ \beta_{21}\Gamma_C & 0 & 0 & 0 \\ 0 & \beta_{21}\Gamma_C & 0 & 0 \end{bmatrix}\begin{bmatrix} \tilde{U}_{C,0S} \\ \tilde{U}_{C,0C} \\ \tilde{U}_{S,CS} \\ \tilde{U}_{S,CC} \end{bmatrix}.$$

angeben. Die Dynamik der Fourier-Koeffizienten $Q_{2,S0}$ und $Q_{2,C0}$ (0-Subsystem) wird durch das Hüllkurvenmodell

$$\frac{\mathrm{d}}{\mathrm{d}t}\begin{bmatrix} Q_{2,S0} \\ Q_{2,C0} \end{bmatrix} = \begin{bmatrix} \alpha_2 & \omega_1 - \omega_2 \\ -\omega_1 + \omega_2 & \alpha_2 \end{bmatrix}\begin{bmatrix} Q_{2,S0} \\ Q_{2,C0} \end{bmatrix} - \begin{bmatrix} \beta_{21}\Omega - \beta_2\tilde{U}_{S,C0} \\ \beta_{21}\left(\Gamma_M + \Gamma_C\tilde{U}_{C,00}\right) \end{bmatrix} \tag{18}$$

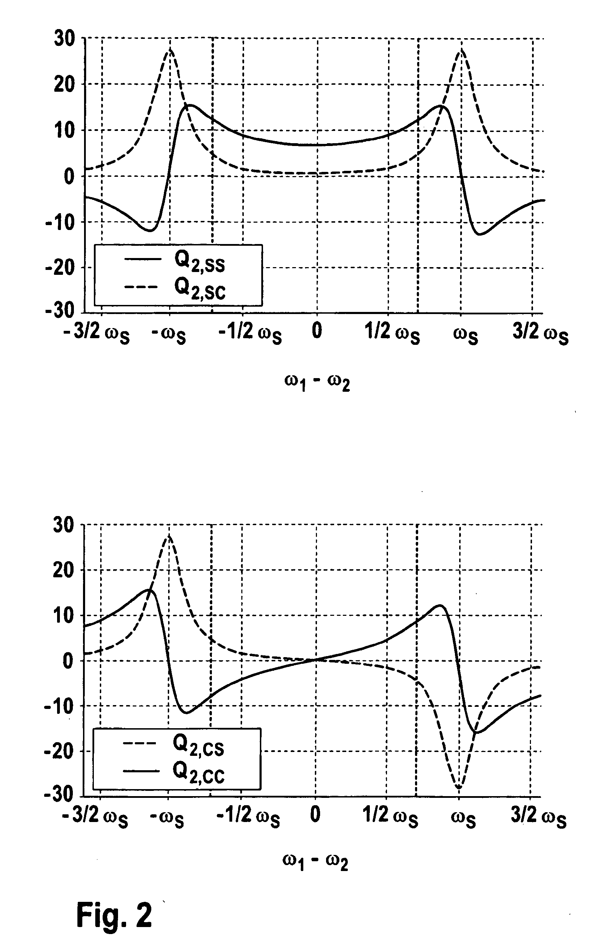

beschrieben. Daher kann die oben beschriebene entkoppelte Rückstell- und Quadraturregelung nun für das 0-Subsystem vom Eingang $\mathbf{U}_0 = [\tilde{U}_{S,C0}\ \tilde{U}_{C,00}]^T$ auf den Ausgang $\mathbf{Y}_0 = [Y_{S0}\ Y_{C0}]^T$ in der gleichen Form verwendet werden. Betrachtet man den eingeschwungenen Zustand von (17) für eine Anregung mit konstantem Eingang $\tilde{U}_{S,CC}$, ($\tilde{U}_{S,CS} = \tilde{U}_{C,0S} = \tilde{U}_{C,0C}$ = 0), so stellt sich der in Fig. 2 gezeigte Verlauf der Fourier-Koeffizienten $Q_{2,SS}$, $Q_{2,SC}$, $Q_{2,CS}$ und $Q_{2,CC}$ über dem Frequenzabstand $\omega_1 - \omega_2$ ein.

Es zeigt sich, dass die Ausgangskomponente $Y_{CC} = c_2 Q_{2,CC}$ im gekennzeichneten Bereich einen bijektiven Zusammenhang $Y_{CC} = f_S(\omega_1 - \omega_2)$ mit einem Nulldurchgang bei $\omega_1 = \omega_2$ aufweist. Unter der oben angeführten Annahme, dass die Dynamik der Frequenzregelung wesentlich langsamer ist als die der Rückstell- und Quadraturregelung, kann die inverse stationäre Beziehung $f_S^{-1}(Y_{CC})$ zur online-Identifikation des Parameters $\omega_1 - \omega_2$ herangezogen werden. Für die Realisierung, z.B. mittels Look-Up Table, reichen im Extremfall drei Arbeitspunktspunkte bei $\omega_1 - \omega_2 \in \{-\Delta\omega_r, 0, \Delta\omega_r\}$ mit $\Delta\omega_r \gg 1$ aus.

Für die eigentliche Frequenzregelung im Matched-Mode Betrieb wird nun das Ausgangssignal $Y_{cc}$ auf Null geregelt. Dazu kann das System (17) um den stationären Arbeitspunkt bei konstantem $\tilde{U}_{S,cc} = \tilde{U}_{S,cc}^*$ im Matched-Mode $\omega_2^* = \omega_1$, d.h. es gilt, vgl. (9),

$$\tilde{U}_{T,0}^* = \left(\omega_1^2 + \alpha_2^2 - \frac{k_2}{m_2}\right)\frac{m_2}{k_{2,T}}, \tag{19}$$

linearisiert werden. Als Arbeitspunkt ergibt sich

$$Y_{SS}^* = -\frac{\omega_S \beta_2 c_2}{\alpha_2^2 + \omega_S^2} \widetilde{U}_{S,CC}^*, \qquad Y_{SC}^* = \frac{\alpha_2 \beta_2 c_2}{\alpha_2^2 + \omega_S^2} \widetilde{U}_{S,CC}^*, \qquad Y_{CS}^* = Y_{CC}^* = 0. \quad (20)$$

Die Übertragungsfunktion vom Eingang $\widetilde{U}_{T,0}$ zum Ausgang $Y_{CC}$ lautet

$$G_S(s) = \frac{1}{2} \frac{(s - \alpha_2)\alpha_2 + \omega_S^2}{(s - \alpha_2)^2 + \omega_S^2} \frac{\beta_2 c_2 k_{2,T} \widetilde{U}_{S,CC}^*}{\omega_1 (\alpha_2^2 + \omega_S^2)} \qquad (21)$$

und dient als Basis für den Entwurf des Frequenzreglers bzw. der Frequenzreglereinheit $R_F(s)$. Die gesamte Regelungsstruktur ist in Fig. 3 dargestellt.

Im Folgenden wird beispielhaft das Verfahren bzw. der Drehratensensor nach Konzept B, veranschaulicht anhand Fig. 4 erläutert:

Eine Alternative zur direkten Einspeisung eines harmonischen Eingangssignals ist die Vorgabe eines harmo-nischen Sollwertes $\mathbf{Y}_D = [0 \quad Y_{CC}^* \cos(\omega_S t)]^T$ für den Ausgang des Sensors, also die Regelgröße $\mathbf{Y} = [Y_S \ Y_C]^T$ der Rückstell- und Quadraturregelung. Nimmt man zunächst an, dass die Rückstell- und Quadraturregelung ideal ist und der Ausgang $\mathbf{Y}$ dem Sollwert exakt folgt, d.h. für die Übertragungsmatrix des geschlossenen Kreises gilt

$$\mathbf{T}_{r,y} = (\mathbf{I} + \mathbf{GRT})^{-1}\mathbf{GRT} \cong \mathbf{I}, \qquad (22)$$

bzw. $Q_{2,SS} = 0$, $Q_{2,SC} = 0$, $Q_{2,CS} = 0$ und $Q_{2,CC} = Y_{CC}^*/c_2$, so erhält man die Eingangsgröße $\mathbf{U} = [\widetilde{U}_{S,C} \ \widetilde{U}_{C,0}]^T$ im eingeschwungenen Zustand aus (17) und (18) in der Form

$$\widetilde{U}_{S,C} = \underbrace{\frac{\beta_{21}}{\beta_2} \Omega}_{\widetilde{U}_{S,C0}} + \underbrace{\frac{\omega_1 - \omega_2}{\beta_2 c_2} Y_{CC}^* \cos(\omega_S t)}_{\widetilde{U}_{S,CC}}, \qquad (23)$$

$$\widetilde{U}_{C,0} = \underbrace{-\frac{\Gamma_M}{\Gamma_C}}_{\widetilde{U}_{C,00}} \underbrace{-\frac{\omega_S}{\beta_{21}\Gamma_C c_2} Y_{CC}^* \sin(\omega_S t)}_{\widetilde{U}_{C,0S}} \underbrace{-\frac{\alpha_2}{\beta_{21}\Gamma_C c_2} Y_{CC}^* \cos(\omega_S t)}_{\widetilde{U}_{C,0C}}.$$

Man sieht, dass der Fourier-Koeffizient $\widetilde{U}_{S,CC}$ nun linear von der Frequenzdifferenz $\omega_1 - \omega_2$ abhängig ist. Die Identifikation der Frequenzdifferenz kann also mit der inversen Abbildung $g_S^{-1}(\widetilde{U}_{S,CC}) = \widetilde{U}_{S,CC}\beta_2 c_2/Y_{2,CC}^*$ erfolgen. Die Frequenzregelung hat nun die Aufgabe, den Fourier-Koeffizienten $\widetilde{U}_{S,CC}$ auf Null zu regeln. Die für die Frequenzregelung zu Grunde liegende Übertragungsfunktion der um den Arbeitspunkt linearisierten Strecke vom Eingang $\widetilde{U}_{T,0}$ zum Ausgang $\widetilde{U}_{S,CC}$ ist gegeben duch die stationäre Beziehung

$$G_S = -\frac{1}{2}\frac{k_{2,T}}{\beta_2 c_2 \omega_1}Y_{CC}^* \cdot \qquad\qquad (24)$$

Der Fourier-Koeffizient $\tilde{U}_{S,C0}$ in (23) ist proportional zur Drehrate und dient daher als Ausgang des Drehratensensors. Die zugehörige kaskadierte Regelungsstruktur ist in Fig. 4 dargestellt. In der Realität ist die Übertragungsmatrix des geschlossenen Kreises $\mathbf{T}_{r,y}$ nicht exakt gleich der Einheitsmatrix. Die Antwort auf die harmonische Sollwertvorgabe weist dann im eingeschwungenen Zustand eine Phasenverschiebung $\varphi_C$ und Amplitudenänderung $A_c$ auf, welche bei der anschließenden Demodulation korrigiert werden kann indem anstelle von $\cos(\omega_S t)$ mit $A_c\cos(\omega_S t+\varphi_C)$ demoduliert wird. Ein vorteilhaftes Merkmal des vorliegenden Gesamtkonzeptes stellt also beispielsweise die nichtlineare Eingangsgrößentransformation (5) dar. Konventionelle Verfahren zur Regelung der sekundären Resonanzfrequenz von kapazitiven Drehratensensoren verzichten auf die Kompensation der inhärenten quadratischen Eingangs-Nichtlinearität. Falls eine Quadratur- und/oder Rückstellregelung für den Betrieb des Drehratensensors benötigt werden, hat dies zur Folge, dass sich die Frequenzregelung sowie die Quadratur- und Rückstellregelung gegenseitig beeinflussen. Da insbesondere im Fall einer Rückstellregelung das Ausgangssignal des Drehratensensors der benötigten Stellgröße zur Rückstellung der Drehrate entspricht, tritt hier das Problem auf, dass die Ausgangsgröße des Drehratensensors direkt von der Frequenzregelung beeinflusst wird. Wenn sich also die sekundäre Resonanzfreque n z , z.B. aufgrund von Temperatureinflüssen, ändert und die Frequenzregelung die dadurch entstehende Regelabweichung kompensiert, tritt auch eine Änderung des Ausgangssignals auf. Dieser unerwünschte Effekt kann durch die vorgeschlagene Eingangsgrößentransformation vermieden werden, sodass aufwändige Korrekturen mittels Kennlinienfelder nicht erforderlich sind.

Für das vollständig entkoppelte Gesamtsystem mit den neuen transformierten Eingangsgrößen ($\tilde{u}_T$, $\tilde{u}_C$ und $\tilde{u}_S$) können bevorzugt die Frequenzregelung sowie die Quadratur- und Rückstellregelung unabhängig voneinander entworfen werden. Dazu kann man prinzipiell zwei unterschiedliche Regelungskonzepte betrachten, welche sich durch das für die Frequenzregelung herangezogene Rückführungssignal unterscheiden. Das Regelungskonzept A zeichnet sich dadurch aus, dass ein zusätzliches harmonisches Eingangssignal eingespeist und das benötigte Messsignal für die Frequenzregelung durch eine entsprechende Demodulation, als zusätzliche Demodulation, des Ausgangssignals gewonnen wird. Im Unterschied dazu wird beim Regelungskonzept B das gesamte Ausgangssignal auf einen vorgegebenen Sollwert geregelt und das benötigte Messsignal für die Frequenzregelung durch eine entsprechende Demodulation der Stellgrößen gewonnen. Das Regelungskonzept A eignet sich prinzipiell für eine Frequenzregelung ohne gleichzeitiger Quadratur- und Rückstellregelung, hat aber den Nachteil des nichtlinearen Zusammenhanges zwischen der Resonanzfrequenz und dem zugehörigen Messsignal ($Y_{2,CC} = f_S(\omega_1 - \omega_2)$), siehe auch Fig. 2. Im Gegensatz dazu hat das Regelungskonzept B den Vorteil eines linearen Zusammenhanges zwischen der Resonanzfrequenz und dem zugehörigen

Messsignal ($\tilde{U}_{S,CC} = Y_{2,CC}^*(\omega_1 - \omega_2)/(\beta_2 c_2)$) und ermöglicht damit einen beliebig großen stabilen Einzugsbereich für die Frequenzregelung. Im Vergleich zum Regelungskonzept A ist hier die Komplexität der benötigten Regelungsarchitektur, insbesondere im Hinblick auf eine Realisierung als integrierte Schaltung, geringer. In den Regelungskonzepten A und B erfolgt vorzugsweise die Quadratur- und Rückstellregelung durch Rückführung des Ausgangssignals nach einer Demodulation in eine Quadratur- und Drehratenkomponente. Um das Quadratur- und Drehratensignal dynamisch zu entkoppeln und somit die Quadratur- und Rückstellregelung getrennt voneinander entwerfen zu können, bedient man sich der Entkopplungsmatrix $\mathbf{T}(s)$, der Ausgangsgrößentransformationseinheit siehe (15).

**Patentansprüche**

1. Verfahren zum präzisen Messbetrieb eines mikromechanischen Drehratensensors, umfassend wenigstens eine seismische Masse, zumindest eine Antriebseinrichtung zum Antreiben der seismischen Masse in der Primärmode ($q_1$) und vier Trimm-Elektrodenelemente (1), welche der seismischen Masse direkt oder indirekt gemeinsam zugeordnet sind, wobei jeweils zwischen den einzelnen dieser Trimm-Elektrodenelemente (1) und der seismischen Masse eine elektrische Trimmspannung ($u_1$, $u_2$, $u_3$, $u_4$) angelegt wird, wobei jede dieser elektrischen Trimmspannungen ($u_1$, $u_2$, $u_3$, $u_4$) in Abhängigkeit einer Resonanzfrequenzstellgröße ($\tilde{u}_T$, $\tilde{U}_{T,0}$), einer Quadraturstellgröße ($\tilde{u}_C$, $\tilde{U}_{C,0}$) und einer Rückstellgröße ($\tilde{u}_S$) eingestellt werden, und wobei zwischen dem ersten Trimm-Elektrodenelement und der seismischen Masse eine erste elektrische Trimmspannung angelegt wird, zwischen dem zweiten Trimm-Elektrodenelement und der seismischen Masse eine zweite Trimmspannung, zwischen dem dritten Trimm-Elektrodenelement und der seismischen Masse eine dritte Trimmspannung und zwischen dem vierten Trimm-Elektrodenelement und der seismischen Masse eine vierte Trimmspannung angelegt wird, **dadurch gekennzeichnet, dass** die erste $u_1$, die zweite $u_2$, die dritte $u_3$ und die vierte Trimmspannung $u_4$ jeweils im Wesentlichen in folgender Abhängigkeit der Resonanzfrequenzstellgröße $\tilde{u}_T$, der Quadraturstellgröße

$\tilde{u}_C$ und der Rückstellgröße $\tilde{u}_S$ eingestellt werden: $u_1 =$

$$\sqrt{\tilde{u}_T - \tilde{u}_C + \tilde{u}_S}, \quad u_2 = \sqrt{\tilde{u}_T + \tilde{u}_C - \tilde{u}_S}, \quad u_3 = \sqrt{\tilde{u}_T + \tilde{u}_C + \tilde{u}_S}, \quad u_4 = \sqrt{\tilde{u}_T - \tilde{u}_C - \tilde{u}_S} \ .$$

2. Verfahren nach Anspruch 1, **dadurch gekennzeichnet, dass** die Trimm-Elektrodenelemente (1) jeweils so ausgebildet und angeordnet sind, dass sich zwischen dem ersten, zweiten, dritten und vierten Trimm-Elektrodenelement und einem jeweils zugeordneten Massen-Elektrodenelement (2) der zugeordneten seismischen Masse, wobei zwischen Trimm-Elektrodenelement und Massen-Elektrodenelement die zugehörige Trimmspannung angelegt wird, eine Kapazität $C_1$, $C_2$, $C_3$ und $C_4$ wie folgt ausbildet

$$C_1 = \varepsilon_0 \frac{A_1 + r_1 t_1 q_1}{g_1 - s_1 q_2}, \quad C_2 = \varepsilon_0 \frac{A_2 + r_2 t_2 q_1}{g_2 + s_2 q_2}, \quad C_3 = \varepsilon_0 \frac{A_3 - r_3 t_3 q_1}{g_3 - s_3 q_2}$$

und

$$C_4 = \varepsilon_0 \frac{A_4 - r_4 t_4 q_1}{g_4 + s_4 q_2},$$

wobei i jeweils ein Index bezüglich der Nummerierung der Elektrodenelemente ist, $g_i$ die Spaltentfernung zwischen Trimm-Elektrodenelement und zugeordnetem Massen-Elektrodenelement im unausgelenkten Zustand, $A_i$ die Überlappfläche zwischen Trimm-Elektrodenelement und zugeordnetem Massen-Elektrodenelement im unausgelenkten Zustand, das Produkt $\pm\, r_i$ mal $t_i$ mal $q_1$ die Änderung der Überlappfläche in Abhängigkeit der Auslenkung der Primärmode $q_1$ ist, wobei $t_i$ die Überlapptiefe zwischen Trimm-Elektrodenelement und zugeordnetem Massen-Elektrodenelement und $r_i$ eine erste positive geometrische Konstante bezüglich der Auslenkung der Primärmode $q_1$ ist, und das Produkt $\pm\, s_i$ mal $q_2$ die Änderung der Spaltentfernung zwischen Trimm-Elektrodenelement und Massen-Elektrodenelement in Abhängigkeit der Auslenkung der Sekundärmode $q_2$ ist, wobei $s_i$ eine zweite positive geometrische Konstante bezüglich der Auslenkung der Sekundärmode $q_2$ ist.

3. Verfahren nach Anspruch 2, **dadurch gekennzeichnet, dass** bei sämtlichen Trimm-Elektrodenelement-Massen-Elektrodenelementpaaren (1, 2) $A_i$, $r_i$, $t_i$, $g_i$ und $s_i$ im Wesentlichen gleich sind.

4. Verfahren nach mindestens einem der Ansprüche 1 bis 3, **dadurch gekennzeichnet, dass** der Drehratensensor eine Regelungsanordnung (3) umfasst, mit welcher die elektrischen Trimmspannungen eingeregelt werden, wobei einer ersten Reglereinheit (4) die demodulierte Regelgröße (Y) zugeführt wird, welche insbesondere mittels einer Demodulation (5) mit zwei zueinander um 90° phasenverschobenen harmonischen Signalen aus der ursprünglichen Regelgröße (y) gewonnen wird, wobei die ursprüngliche Regelgröße (y) die erfasste Auslenkung der seismischen Masse in Richtung ihrer Sekundärmode ($q_2$) repräsentiert.

5. Verfahren nach Anspruch 4, **dadurch gekennzeichnet, dass** die Regelungsanordnung (3) eine Ausgangsgrößentransformationseinheit (6) aufweist, in welcher die demodulierte Regelgröße (Y) dynamisch in Abhängigkeit der Frequenzdifferenz aus der Primärmodenfrequenz ($\omega_1$) und der Sekundärmodenfrequenz ($\omega_2$) und zumindest eines Dämpfungsparameters ($\alpha_2$) transformiert wird oder stationär in Abhängigkeit wenigstens einer Transformationskonstanten transformiert wird, in eine Drehratengröße und eine Quadraturgröße ($Z$, $Z_0$), wonach daraus eine Drehratenregelfehlergröße und eine Quadraturregelfehlergröße, jeweils unter Vorgabe einer Führungsgröße gebildet werden, und danach die Drehratenregelfehlergröße und die Quadraturregelfehlergröße als Eingangsgrößen der ersten Reglereinheit (4) zugeführt werden, welche ausgangsseitig zumindest die Quadraturstellgröße ($\tilde{u}_C$, $\tilde{U}_{C,0}$) und die Rückstellgröße ($\tilde{u}_S$, $\tilde{U}_{S,C}$) zur zumindest teilweise entkoppelten Quadraturunterdrückung und Rückstellung der Auslenkung der seismischen Masse aufgrund einer erfassten Drehrate erzeugt.

6. Verfahren nach Anspruch 4, **dadurch gekennzeichnet, dass** aus der demodulierten Regelgröße (Y) unter Vorgabe einer Regelführungsgröße eine Regelfehlergröße gebildet wird, wonach die Regelungsanordnung (3) in einer Ausgangsgrößentransformationseinheit (6) die Regelfehlergröße dynamisch in Abhängigkeit der Frequenzdifferenz aus der Primärmodenfrequenz ($\omega_1$) und der Sekundärmodenfrequenz ($\omega_2$) und zumindest eines Dämpfungspara-meters ($\alpha_2$) transformiert wird oder stationär in Abhängigkeit wenigstens einer Transformationskonstanten transformiert wird, in eine Drehratenregelfehlergröße und eine Quadraturregelfehlergröße (Z, $Z_0$), wonach die Drehra-tenregelfehlergröße und die Quadraturregelfehlergröße als Eingangsgrößen der ersten Reglereinheit (4) zugeführt werden, welche ausgangsseitig zumindest die Quadraturstellgröße ($\tilde{u}_C$, $\check{U}_{C,0}$) und die Rückstellgröße ($\tilde{u}_S$, $\check{U}_{S,C}$) zur zumindest teilweise entkoppelten Quadraturunterdrückung und Rückstellung der Auslenkung der seismischen Masse aufgrund einer erfassten Drehrate erzeugt.

7. Verfahren nach mindestens einem der Ansprüche 1 bis 4, **dadurch gekennzeichnet, dass** der Drehratensensor, insbesondere dessen Regelungsanordnung (3), eine Stellgrößentransformationseinheit (7) aufweist, durch welche in Abhängigkeit der Resonanzfrequenzstellgröße $\tilde{u}_T$, der Quadraturstellgröße $\tilde{u}_C$ und der Rückstellgröße $\tilde{u}_S$ nach

Maßgabe der Gleichungen $u_1 = \sqrt{\tilde{u}_T - \tilde{u}_C + \tilde{u}_S}$, $u_2 = \sqrt{\tilde{u}_T + \tilde{u}_C - \tilde{u}_S}$, $u_3 =$

$\sqrt{\tilde{u}_T + \tilde{u}_C + \tilde{u}_S}$, $u_4 = \sqrt{\tilde{u}_T - \tilde{u}_C - \tilde{u}_S}$ die Trimmspannungen $u_1$, $u_2$, $u_3$ und $u_4$ bereitgestellt werden.

8. Verfahren nach mindestens einem der Ansprüche 5 bis 6, **dadurch gekennzeichnet, dass** die Ausgangsgrößentransformationseinheit (6) so ausgelegt ist, dass sie eine Multiplikation der demodulierten Regelgröße (Y) oder der davon abhängigen Regelfehlergröße mit folgender Übertragungsmatrix durchführt

$$T(s) = \begin{bmatrix} -1 & \frac{\omega_1 - \omega_2}{s - \alpha_2} \\ \frac{\omega_1 - \omega_2}{s - \alpha_2} & 1 \end{bmatrix},$$ wobei $\alpha_2$ ein Dämpfungsparameter bezüglich der Sekundärmode ist und s die Laplacevariable.

9. Verfahren nach mindestens einem der Ansprüche 5 bis 8, **dadurch gekennzeichnet, dass** die Regelungsanordnung (3) eine Frequenzreglereinheit (9) aufweist, welche in Abhängigkeit einer Frequenzinformation oder in Abhängigkeit einer davon abhängigen Frequenzregelfehlerinformation aus der demodulierten Regelgröße (Y) die Resonanzstell-größe ($\tilde{u}_T$, $\check{U}_{T,0}$) bereitstellt.

10. Verfahren nach Anspruch 9, **dadurch gekennzeichnet, dass** in der Regelungsanordnung (3) ein harmonisches Frequenzidentifikationssignal ($\check{U}_{S,CC}\cos(\omega_s t)$) generiert wird oder ihr zugeführt wird, welches eine Frequenz $\omega_s$ aufweist, die verschieden zur Primärmodenfrequenz ($\omega_1$) ist, wobei die Quadraturstellgröße ($\tilde{u}_C$, $\check{U}_{C,0}$) und/oder die Rückstellgröße ($\tilde{u}_S$, $\check{U}_{S,C0}$) mit dem Frequenzidentifikationssignal ($\check{U}_{S,CC}\cos(\omega_s t)$) überlagert werden, wonach aus der demodulierten Regelgröße (Y) nach einer zusätzlichen Demodulation (8) mit der Frequenz $\omega_s$ die Frequenzin-formation gewonnen wird, über die Frequenzdifferenz aus der Primärmodenfrequenz ($\omega_1$) und der Sekundärmo-denfrequenz ($\omega_2$), wonach in Abhängigkeit dieser Information oder in Abhängigkeit einer davon abhängigen Fre-quenzregelfehlerinformation zumindest die Resonanzfrequenzstellgröße ($\tilde{u}_T$, $U_{T,0}$) durch die Frequenzreglereinheit (9) bereitgestellt wird.

11. Verfahren nach Anspruch 10, **dadurch gekennzeichnet, dass** nach der zusätzlichen Demodulation (8) mit der Frequenz $\omega_s$ die Frequenzinformation der Ausgangsgrößentransformationseinheit (6) bereitgestellt wird und außerdem aus der Frequenzinformation eine Frequenzregelfehlerinformation mittels einer Frequenzinformationsführungsgröße, die insbesondere 0Hz ist, gewonnen wird, wonach diese Frequenzregelfehlerinformation der Frequenzreglereinheit (9) zugeführt wird, welche daraus die Resonanzfrequenzstellgröße ($\tilde{u}_T$, $\check{U}_{T,0}$) erzeugt.

12. Verfahren nach mindestens einem der Ansprüche 10 bis 11, **dadurch gekennzeichnet, dass** das harmonische Frequenzidentifikationssignal ($Y_D$) als Führungsgröße oder der Führungsgröße überlagert eingebracht wird entweder zur Erzeugung der Regelfehlergröße vor der Ausgangsgrößentransformationseinheit (6) oder jeweils zur Erzeugung der Drehratenregelfehlergröße und der Quadraturregelfehlergröße nach der Ausgangsgrößentransformationseinheit (6), wonach die Drehratenregelfehlergröße und die Quadraturregelfehlergröße als Eingangsgrößen der ersten Reglereinheit (4) zugeführt werden, welche ausgangsseitig zumindest die Quadraturstellgröße ($\tilde{u}_C$, $\check{U}_{C,0}$)

und die Rückstellgröße ($\tilde{u}_S$, $\tilde{U}_{S,C}$) erzeugt.

13. Verfahren nach Anspruch 12, **dadurch gekennzeichnet, dass** die Rückstellgröße ($\tilde{u}_S$, $\tilde{U}_{S,C}$) die mit einer Information des Frequenzidentifikationssignals behaftet ist, danach mit der Frequenz $\omega_s$ demoduliert (8) wird, wodurch die Frequenzinformation gewonnen wird, wonach diese Frequenzinformation der Ausgangsgrößentransformationseinheit (6) bereitgestellt wird und außerdem aus der Frequenzinformation eine Frequenzregelfehlerinformation mittels einer Frequenzinformationsführungsgröße, die insbesondere 0 ist, gewonnen wird, wonach diese Frequenzregelfehlerinformation der Frequenzreglereinheit (9) zugeführt wird, welche daraus die Resonanzfrequenzstellgröße ($\tilde{u}_T$, $\tilde{U}_{T,0}$) erzeugt.

14. Mikromechanischer Drehratensensor, umfassend wenigstens eine seismische Masse, zumindest eine Antriebseinrichtung zum Antreiben der seismischen Masse in der Primärmode und mindestens vier Trimm-Elektrodenelemente (1), welche der seismischen Masse (2) direkt oder indirekt gemeinsam zugeordnet sind wobei jeweils zwischen den einzelnen dieser Trimm-Elektrodenelemente und der seismischen Masse eine elektrische Trimmspannung angelegt wird, **dadurch gekennzeichnet, dass** der Drehratensensor zur Durchführung des Verfahrens nach mindestens einem der Ansprüche 1 bis 13 ausgebildet ist.

**Claims**

1. Method for the precise measuring operation of a micro-mechanical rotation rate sensor, comprising at least one seismic mass, at least one drive device for driving the seismic mass in the primary mode ($q_1$) and four trimming electrode elements (1) which are jointly associated directly or indirectly with the seismic mass, wherein an electric trimming voltage ($u_1$, $u_2$, $u_3$, $u_4$) is applied between each of these individual trimming electrode elements (1) and the seismic mass, wherein
each of these electric trimming voltages ($u_1$, $u_2$, $u_3$, $u_4$) is set as a function of a resonance frequency manipulated variable ($\tilde{u}_T$, $\tilde{U}_{T,0}$) a quadrature manipulated variable ($\tilde{u}_C$, $\tilde{U}_{C,0}$) and a resetting variable ($\tilde{u}_S$), and wherein
a first electric trimming voltage is applied between the first trimming electrode element and the seismic mass, a second trimming voltage is applied between the second trimming electrode element and the seismic mass, a third trimming voltage is applied between the third trimming electrode element and the seismic mass, and a fourth trimming voltage is applied between the fourth trimming electrode element and the seismic mass, **characterized in that** the first trimming voltage $u_1$, the second trimming voltage $u_2$, the third trimming voltage $u_3$ and the fourth trimming voltage $u_4$ are each set substantially with the following dependence of the resonance frequency manipulated variable $\tilde{u}_T$, the quadrature manipulated variable $\tilde{u}_C$ and the resetting variable $\tilde{u}_S$:

$$u_1 = \sqrt{\tilde{u}_T - \tilde{u}_C + \tilde{u}_S}, \quad u_2 = \sqrt{\tilde{u}_T + \tilde{u}_C - \tilde{u}_S},$$

$$u_3 = \sqrt{\tilde{u}_T + \tilde{u}_C + \tilde{u}_S}, \quad u_4 = \sqrt{\tilde{u}_T - \tilde{u}_C - \tilde{u}_S}.$$

2. Method according to Claim 1, **characterized in that** the trimming electrode elements (1) are each embodied and arranged in such a way that a capacitor $C_1$, $C_2$, $C_3$ and $C_4$ is formed between the first, second, third and fourth trimming electrode element and a respectively associated mass electrode element (2) of the associated seismic mass, with the associated trimming voltage being applied between the trimming electrode element and the mass electrode element, as follows:

$$C_1 = \varepsilon_0 \frac{A_1 + r_1 t_1 q_1}{g_1 - s_1 q_2}, \quad C_2 = \varepsilon_0 \frac{A_2 + r_2 t_2 q_1}{g_2 + s_2 q_2}, \quad C_3 = \varepsilon_0 \frac{A_3 - r_3 t_3 q_1}{g_3 - s_3 q_2},$$

and

$$C_4 = \varepsilon_0 \, \frac{A_4 - r_4 t_4 q_1}{g_4 + s_4 q_2},$$

where i is in each case an index relating to the numbering of the electrode elements, $g_i$ is the distance across the gap between the trimming electrode element and the associated mass electrode element in the non-deflected state, $A_i$ is the overlapping area between the trimming electrode element and the associated mass electrode element in the non-deflected state, the product $\pm$ $r_i$ times $t_i$ times $q_1$ is the change in the overlapping area as a function of the deflection of the primary mode $q_1$, wherein $t_i$ is the overlapping depth between the trimming electrode element and the associated mass electrode element, and $r_i$ is a first positive geometric constant relating to the deflection of the primary mode $q_1$, and the product $\pm$ $s_i$ times $q_2$ is the change in the distance across the gap between the trimming electrode element and the mass electrode element as a function of the deflection of the secondary mode $q_2$, wherein $s_i$ is a second positive geometric constant relating to the deflection of the secondary mode $q_2$.

3. Method according to Claim 2, **characterized in that** $A_i$, $r_i$, $t_i$, $g_i$ and $s_i$ are substantially the same in all the trimming electrode element mass electrode element pairs (1, 2).

4. Method according to at least one of Claims 1 to 3, **characterized in that** the rotation rate sensor comprises a control arrangement (3) with which the electric trimming voltages are adjusted, wherein the demodulated controlled variable (Y) is fed to a first controller unit (4), which controlled variable (Y) is acquired, in particular, by means of demodulation (5) from the original controlled variable (y) using two harmonic signals which are phase-shifted through 90° with respect to one another, wherein the original controlled variable (y) represents the detected deflection of the seismic mass in the direction of its secondary mode ($q_2$).

5. Method according to Claim 4, **characterized in that** the control arrangement (3) has an output variable transformation unit (6) in which the demodulated controlled variable (Y) is transformed dynamically as a function of the frequency difference between the primary mode frequency ($\omega_1$) and the secondary mode frequency ($\omega_2$) and at least one damping parameter ($\alpha_2$) or is transformed in a steady-state fashion into a rotation rate variable and a quadrature variable ($Z$, $Z_0$) as a function of at least one transformation constant, after which a rotation rate control error variable and a quadrature control error variable are formed therefrom, in each case with the definition of a reference variable, and subsequently the rotation rate control error variable and the quadrature control error variable are fed as input variables to the first controller unit (4) which generates at least the quadrature manipulated variable ($\tilde{u}_C$, $\tilde{U}_{C,0}$) and the resetting variable ($\tilde{u}_S$, $\tilde{U}_{S,C}$) on the output side for the at least partially decoupled quadrature suppression and the resetting of the deflection of the seismic mass on the basis of a detected rotation rate.

6. Method according to Claim 4, **characterized in that** a control error variable is formed from the demodulated controlled variable (Y) with the definition of a control reference variable, after which the control arrangement (3) is dynamically transformed in an output variable transformation unit (6) the control error variable as a function of the frequency difference between the primary mode frequency ($\omega_1$) and the secondary mode frequency ($\omega_2$) and at least one damping parameter ($\alpha_2$) or is transformed in a steady-state fashion into a rotation rate control error variable and a quadrature control error variable ($Z$, $Z_0$) as a function of at least one transformation constant, after which the rotation rate control error variable and the quadrature control error variable are fed as input variables to the first controller unit (4) which generates on the output side at least the quadrature manipulated variable ($\tilde{u}_C$, $\tilde{U}_{C,0}$) and the resetting variable ($\tilde{u}_S$, $\tilde{U}_{S,C}$) for the at least partially decoupled quadrature suppression and resetting of the deflection of the seismic mass on the basis of a detected rotation rate.

7. Method according to at least one of Claims 1 to 4, **characterized in that** the rotation rate sensor, in particular the control arrangement (3) thereof, has a manipulated variable transformation unit (7), by which the trimming voltages $u_1$, $u_2$, $u_3$ and $u_4$ are made available as a function of the resonance frequency manipulated variable $\tilde{u}_T$, the quadrature

manipulated variable $\tilde{u}_C$ and the resetting variable $\tilde{u}_S$ in accordance with the equations $u_1 = \sqrt{\tilde{u}_T - \tilde{u}_C + \tilde{u}_S}$,

$$u_2 = \sqrt{\tilde{u}_T + \tilde{u}_C - \tilde{u}_S}, \quad u_3 = \sqrt{\tilde{u}_T + \tilde{u}_C + \tilde{u}_S}, \quad u_4 = \sqrt{\tilde{u}_T - \tilde{u}_C - \tilde{u}_S} \; .$$

8. Method according to at least one of Claims 5 to 6, **characterized in that** the output variable transformation unit (6) is configured in such a way that it carries out multiplication of the demodulated controlled variable (Y) or of the control error variable which is dependent thereon, with the following transformation matrix

$$T(S) = \begin{bmatrix} -1 & \dfrac{\omega_1 - \omega_2}{s - \alpha_2} \\ \dfrac{\omega_1 - \omega_2}{s - \alpha_2} & 1 \end{bmatrix}, \text{ where } \alpha_2 \text{ is a damping parameter relating to the secondary mode, and s is}$$

the Laplace variable.

9. Method according to at least one of Claims 5 to 8, **characterized in that** the control arrangement (3) has a frequency controller unit (9) which makes available the resonance manipulated variable ($\tilde{u}_T$, $\tilde{U}_{T,0}$) as a function of a frequency information item or as a function of a frequency control error information item depenendent thereon from demodulated controlled variable (Y).

10. Method according to Claim 9, **characterized in that** a harmonic frequency identification signal ($\tilde{U}_{S,CC}\cos(\omega_s t)$) is generated in the control arrangement (3) or fed thereto, which frequency identification signal ($\tilde{U}_{S,CC}\cos(\omega_s t)$) has a frequency $\omega_s$ which is different from the primary mode frequency ($\omega_1$), wherein the frequency identification signal ($\tilde{U}_{S,CC}\cos(\omega_s t)$) is superimposed on the quadrature manipulated variable ($\tilde{u}_C$, $\tilde{U}_{C,0}$) and/or the resetting variable ($\tilde{u}_S$, $\tilde{U}_{S,CO}$), after which the frequency information is acquired from the demodulated controlled variable (Y) after additional demodulation (8) with the frequency $\omega_s$ by means of the frequency difference between the primary mode frequency ($\omega_1$) and the secondary mode frequency ($\omega_2$), after which at least the resonance frequency manipulated variable ($\tilde{u}_T$, $\tilde{U}_{T,0}$) is made available by the frequency controller unit (9) as a function of this information or as a function of frequency control error information dependent thereon.

11. Method according to Claim 10, **characterized in that** after the additional demodulation (8) with the frequency $\omega_s$ the frequency information of the output variable transformation unit (6) is made available, and in addition a frequency control error information item is acquired from the frequency information by means of a frequency information reference variable which is, in particular, 0Hz, after which this frequency control error information is fed to the frequency controller unit (9) which generates the resonance frequency manipulated variable ($\tilde{u}_T$, $\tilde{U}_{T,0}$) therefrom.

12. Method according to at least one of Claims 10 to 11, **characterized in that** the harmonic frequency identification signal ($Y_D$) is introduced as a reference variable or superimposed on the reference variable, either upstream of the output variable transformation unit (6) in order to generate the control error variable, or respectively downstream of the output variable transformation unit (6) in order to generate the rotation rate control error variable and the quadrature control error variable, after which the rotation rate control error variable and the quadrature control error variable are fed as input variables to the first controller unit (4) which generates at least the quadrature manipulated variable ($\tilde{u}_C$, $\tilde{U}_{C,0}$) and the resetting variable ($\tilde{u}_S$, $\tilde{U}_{S,C}$) on the output side.

13. Method according to Claim 12, **characterized in that** the resetting variable ($\tilde{u}_S$, $\tilde{U}_{S,c}$) which is subject to information of the frequency identification signal, is then demodulated (8) with the frequency $\omega_s$, as a result of which the frequency information is acquired, after which this frequency information is made available to the output variable transformation unit (6), and in addition a frequency control error information item is acquired from the frequency information by means of a frequency information reference variable which is, in particular, 0, after which this frequency control error information is fed to the frequency controller unit (9), which generates the resonance frequency manipulated variable ($\tilde{u}_T$, $\tilde{U}_{T,0}$) therefrom.

14. Micro-mechanical rotation rate sensor, comprising at least one seismic mass, at least one drive device for driving the seismic mass in the primary mode and at least four trimming electrode elements (1) which are jointly assigned directly or indirectly to the seismic mass (2), wherein an electric trimming voltage is applied between each of these individual trimming electrode elements and the seismic mass, **characterized in that** the rotation rate sensor is embodied for carrying out the method according to at least one of Claims 1 to 13.

**Revendications**

1. Procédé pour faire fonctionner en mesure précise un capteur micromécanique de vitesse de rotation comprenant au moins une masse sismique,

au moins un dispositif d'entraînement qui entraîne la masse sismique en un mode primaire ($q_1$) et quatre éléments (1) à électrode de gâchette associés ensemble, directement ou indirectement, à la masse sismique,

une tension électrique de gâchette ($u_1$, $u_2$, $u_3$, $u_4$) étant appliquée entre chacun de ces différents éléments (1) d'électrode de gâchette et la masse sismique,

chacune de ces tensions électriques de gâchette ($u_1$, $u_2$, $u_3$, $u_4$) étant réglée en fonction d'une grandeur ($\tilde{u}_T$, $\tilde{U}_{T,0}$) de réglage de fréquence de résonance, d'une grandeur ($\tilde{u}_C$, $\tilde{U}_{C,0}$) de réglage de quadrature et d'une grandeur de rappel ($\tilde{u}_S$),

une première tension électrique de gâchette étant appliquée entre le premier élément d'électrode de gâchette et la masse sismique, une deuxième tension de gâchette étant appliquée entre le deuxième élément d'électrode de gâchette et la masse sismique, une troisième tension de gâchette étant appliquée entre le troisième élément d'électrode de gâchette et la masse sismique et une quatrième tension de gâchette étant appliquée entre le quatrième élément d'électrode de gâchette et la masse sismique,

**caractérisé en ce que**

la première tension de gâchette $u_1$, la deuxième tension de gâchette $u_2$, la troisième tension de gâchette $u_3$ et la quatrième tension de gâchette $u_4$ étant chacune réglée essentiellement dans la dépendance ci-dessous vis-à-vis de la grandeur $\tilde{u}_T$ de réglage de fréquence de résonance, de la grandeur $\tilde{u}_C$ de réglage de quadrature et de la grandeur $\tilde{u}_S$ de rappel :

$$u_1 = \sqrt{\tilde{u}_T - \tilde{u}_C + \tilde{u}_S}, \quad u_2 = \sqrt{\tilde{u}_T + \tilde{u}_C - \tilde{u}_S}, \quad u_3 = \sqrt{\tilde{u}_T + \tilde{u}_C + \tilde{u}_S}, \quad u_4 = \sqrt{\tilde{u}_T - \tilde{u}_C - \tilde{u}_S} \ .$$

2. Procédé selon la revendication 1, **caractérisé en ce que** chacun des éléments (1) d'électrode de gâchette est configuré et disposé de telle sorte qu'une capacité $C_1$, $C_2$, $C_3$ et $C_4$ s'établisse entre le premier, le deuxième, le troisième et le quatrième élément d'électrode de gâchette et l'élément respectif associé (2) d'électrode de masse de la masse sismique associée, la tension de gâchette associée étant appliquée entre l'élément d'électrode de gâchette et l'élément d'électrode de masse, les capacités étant :

$$C_1 = \varepsilon_0 \frac{A_1 + r_1 t_1 q_1}{g_1 - s_1 q_2}, \quad C_2 = \varepsilon_0 \frac{A_2 + r_2 t_2 q_1}{g_2 + s_2 q_2}, \quad C_3 = \varepsilon_0 \frac{A_3 - r_3 t_3 q_1}{g_3 - s_3 q_2} \quad \text{et}$$

$$C_4 = \varepsilon_0 \frac{A_4 - r_4 t_4 q_1}{g_4 + s_4 q_2},$$

où i représente un indice de numérotation des éléments d'électrode, $g_i$ la distance de l'interstice entre l'élément d'électrode de gâchette et l'élément d'électrode de masse associée dans la situation non déviée, $A_i$ la superficie de superposition entre l'élément d'électrode de gâchette et l'élément d'électrode de masse associé en situation non déviée, le produit $\pm$ $r_i$ fois $t_i$ fois $q_1$ la modification de la superficie de superposition en fonction de la déviation du mode primaire $q_1$, $t_i$ étant la profondeur de superposition entre l'élément d'électrode de gâchette et l'élément d'électrode de masse associé, $r_i$ une première constante géométrique positive concernant la déviation du mode primaire $q_1$, le produit $\pm$ $s_i$ fois $q_2$ étant la modification de la distance de l'interstice entre l'élément d'électrode de gâchette et l'élément d'électrode de masse en fonction de la déviation du mode secondaire $q_2$, $s_i$ étant une deuxième constante géométrique positive concernant la déviation du mode secondaire $q_2$.

3. Procédé selon la revendication 2, **caractérisé en ce que** $A_i$, $r_i$, $t_i$, $g_i$ et $s_i$ sont essentiellement égaux dans toutes les paires d'éléments d'électrode de gâchette et d'éléments d'électrode de masse (1, 2).

4. Procédé selon au moins l'une des revendications 1 à 3, **caractérisé en ce que** le capteur de vitesse de rotation comporte un ensemble de régulation (3) par lequel les tensions électriques de gâchette sont régulées, la grandeur de régulation (Y) démodulée qui est obtenue à partir de la grandeur de régulation (y) initiale en particulier au moyen d'une démodulation (5) avec deux signaux harmoniques déphasés l'un de l'autre de 90° étant apportée à une première unité de régulateur (4), la grandeur initiale de régulation (y) représentant la déviation saisie de la masse sismique en direction de son mode secondaire ($q_2$)

**5.** Procédé selon la revendication 4, **caractérisé en ce que** l'ensemble de régulation (3) présente une unité (6) de transformation de grandeurs de sortie dans laquelle la grandeur de régulation (Y) démodulée est transformée de manière dynamique en une grandeur de vitesse de rotation et une grandeur de quadrature (Z, $Z_0$) en fonction de la différence entre la fréquence ($\omega_1$) du mode primaire et la fréquence ($\omega_2$) du mode secondaire et d'au moins un paramètre d'atténuation ($\alpha_2$) ou de manière stationnaire en fonction d'au moins une constante de transformation, suite à quoi une grandeur d'erreur de régulation de vitesse de rotation et une grandeur d'erreur de régulation de quadrature sont formées chaque fois en fonction d'une grandeur de guidage, la grandeur d'erreur de régulation de vitesse de rotation et la grandeur d'erreur de régulation de quadrature étant ensuite apportées en tant que grandeurs d'entrée dans la première unité de régulateur (4) qui forme sur sa sortie au moins la grandeur ($\tilde{u}_c$, $\tilde{U}_{c,0}$) de réglage de quadrature et la grandeur de rappel ($\tilde{u}_s$, $\tilde{U}_{s, c}$) en vue de réduire la quadrature et de ramener la déviation de la masse sismique sur base de la vitesse de rotation saisie, de manière au moins en partie découplée.

**6.** Procédé selon la revendication 4, **caractérisé en ce qu'**une grandeur d'erreur de régulation est formée à partir de la grandeur de régulation (Y) démodulée et en fonction d'une grandeur de guidage de régulation, suite à quoi dans une unité (6) de transformation de grandeurs de sortie, l'ensemble de régulation (3) transforme la grandeur d'erreur de régulation de manière dynamique en une grandeur d'erreur de régulation de vitesse de rotation et une grandeur d'erreur de régulation de quadrature (Z, $Z_0$) en fonction de la différence entre la fréquence ($\omega_1$) du mode primaire et la fréquence ($\omega_2$) du mode secondaire et d'au moins un paramètre d'atténuation ($\alpha_2$) ou de manière stationnaire en fonction d'au moins une constante de transformation, suite à quoi la grandeur d'erreur de régulation de vitesse de rotation et la grandeur d'erreur de régulation de quadrature sont apportées en tant que grandeurs d'entrée dans la première unité de régulateur (4) qui forme sur sa sortie au moins la grandeur ($\tilde{u}_c$, $\tilde{U}_{c, 0}$) de réglage de quadrature et la grandeur de rappel ($\tilde{u}_s$, $\tilde{U}_{s,c}$) en vue de réduire la quadrature et de ramener la déviation de la masse sismique sur base de la vitesse de rotation saisie, de manière au moins en partie découplée.

**7.** Procédé selon au moins l'une des revendications 1 à 4, **caractérisé en ce que** le capteur de vitesse de rotation et en particulier son ensemble de régulation (3) présentent une unité (7) de transformation de grandeurs de réglage par laquelle les tensions de gâchette $u_1$, $u_2$, $u_3$ et $u_4$ sont préparées en fonction de la grandeur $\tilde{u}_T$, de réglage de fréquence de résonance, de la grandeur $\tilde{u}_c$ de réglage de quadrature et de la grandeur de rappel $\tilde{u}_s$ et selon les équations

$$u_1 = \sqrt{\tilde{u}_T - \tilde{u}_C + \tilde{u}_S}\,, \ \ u_2 = \sqrt{\tilde{u}_T + \tilde{u}_C - \tilde{u}_S}\,, \ \ u_3 =$$
$$\sqrt{\tilde{u}_T + \tilde{u}_C + \tilde{u}_S}\,, \ \ u_4 = \sqrt{\tilde{u}_T - \tilde{u}_C - \tilde{u}_S}$$

**8.** Procédé selon au moins l'une des revendications 5 à 6, **caractérisé en ce que** l'unité (6) de transformation de grandeurs de sortie est conçue pour exécuter une multiplication des grandeurs de régulation (Y) démodulées ou des grandeurs d'erreur de régulation qui en dépendent par la matrice de transfert suivante :

$$\mathrm{T}(s) = \begin{bmatrix} -1 & \dfrac{\omega_1 - \omega_2}{s - \alpha_2} \\ \dfrac{\omega_1 - \omega_2}{s - \alpha_2} & 1 \end{bmatrix},$$

dans laquelle $\alpha_2$ est un paramètre d'atténuation du mode secondaire et s la variable de la place.

**9.** Procédé selon au moins l'une des revendications 5 à 8, **caractérisé en ce que** l'ensemble de régulation (3) présente une unité (9) de régulateur de fréquence qui fournit la grandeur ($\tilde{u}_T$, $\tilde{U}_{T,0}$) de réglage de résonance à partir de la grandeur de régulation (Y) démodulée en fonction d'une information de fréquence ou en fonction d'une information d'erreur de régulation de fréquence qui en dépend.

**10.** Procédé selon la revendication 9, **caractérisé en ce qu'**un signal harmonique d'identification de fréquence ($\tilde{U}_{s, cc}$ $\cos(\omega_s t)$) est produit dans l'ensemble de régulation (3) ou y est apporté et présente une fréquence $\omega_s$ différente de la fréquence ($\omega_1$) du mode primaire, la grandeur ($\tilde{u}_c$, $\tilde{U}_{c,0}$) de réglage de quadrature et/ou la grandeur de rappel ($\tilde{u}_s$, $\tilde{U}_{s,c0}$) étant superposées au signal ($\tilde{U}_{s,cc}$ $\cos(\omega_s t)$) d'identification de fréquence, suite à quoi, après une démodulation supplémentaire (8) à la fréquence $\omega_s$, l'information sur la fréquence est obtenue dans la grandeur de régulation (Y) démodulée à partir de la différence entre la fréquence ($\omega_1$) du mode primaire et la fréquence ($\omega_2$) du mode secondaire, suite à quoi, en fonction de cette information ou en fonction d'une information d'erreur de régulation de fréquence qui en dépend, au moins la grandeur ($\tilde{u}_T$, $\tilde{U}_{T,0}$) de réglage de fréquence de résonance est délivrée par l'unité (9) de régulateur de fréquence.

11. Procédé selon la revendication 10, **caractérisé en ce qu'**après la démodulation supplémentaire (8) à la fréquence $\omega_s$, l'information de fréquence de l'unité (6) de transformation de grandeur de sortie est délivrée et en outre une information d'erreur de régulation de fréquence est obtenue à partir de l'information de fréquence au moyen d'une grandeur de guidage d'information de fréquence qui est en particulier de 0 Hz, suite à quoi cette information d'erreur de régulation de fréquence est amenée à l'unité (9) de régulateur de fréquence qui forme à partir d'elle la grandeur ($\tilde{u}_T$, $\tilde{U}_{T,0}$) de fréquence de résonance.

12. Procédé selon au moins l'une des revendications 10 à 11, **caractérisé en ce que** le signal harmonique ($Y_D$) d'identification de fréquence est apporté comme grandeur de guidage ou est superposé à la grandeur de guidage pour former la grandeur d'erreur de régulation en amont de l'unité (6) de transformation de grandeurs de sortie ou pour former la grandeur d'erreur de régulation de vitesse de rotation ou la grandeur d'erreur de régulation de quadrature en aval de l'unité (6) de transformation de grandeurs de sortie, suite à quoi la grandeur d'erreur de régulation de vitesse de rotation et la grandeur d'erreur de régulation de quadrature sont apportées comme grandeurs d'entrée à la première unité de régulateur (4) qui forme à sa sortie au moins la grandeur ($\tilde{u}_c$, $\tilde{U}_{c,0}$) de réglage de quadrature et la grandeur de rappel ($\tilde{u}_s$, $\tilde{U}_{s,c}$).

13. Procédé selon la revendication 12, **caractérisé en ce que** la grandeur de rappel ($\tilde{u}_s$, $\tilde{U}_{s,c}$) chargée d'une information du signal d'identification de fréquence est ensuite démodulée (8) à la fréquence $\omega_s$, grâce à quoi l'information de fréquence est récupérée, suite à quoi cette information de fréquence est délivrée à l'unité (6) de transformation de grandeur de sortie et en outre, à partir de l'information de fréquence, une information d'erreur de régulation de fréquence est obtenue au moyen d'une grandeur de guidage d'information de fréquence qui en particulier est de 0, suite à quoi cette information d'erreur de régulation de fréquence est apportée à l'unité (9) de régulateur de fréquence qui forme à partir d'elle la grandeur ($\tilde{u}_T$, $\tilde{U}_{T,0}$) de réglage de fréquence de résonance.

14. Capteur micromécanique de vitesse de rotation comprenant
au moins une masse sismique,
au moins un dispositif d'entraînement qui entraîne la masse sismique en un mode primaire et au moins quatre éléments (1) à électrode de gâchette associés ensemble, directement ou indirectement, à la masse sismique (2),
une tension électrique de gâchette étant appliquée entre chacun de ces différents éléments d'électrode de gâchette et la masse sismique,
**caractérisé en ce que**
le capteur de vitesse de rotation est configuré pour exécuter le procédé selon au moins l'une des revendications 1 à 13.

**Fig. 1**

**Fig. 2**

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03010492 A1
- WO 2005066585 A1